(19) Europäisches Patentamt
European Patent Office
Office européen des brevets

(11) EP 1 703 419 A1

(12) EUROPEAN PATENT APPLICATION
published in accordance with Art. 158(3) EPC

(43) Date of publication:
**20.09.2006 Bulletin 2006/38**

(21) Application number: **04792480.8**

(22) Date of filing: **15.10.2004**

(51) Int Cl.:
***G06F 17/28*** *(2006.01)*

(86) International application number:
**PCT/JP2004/015263**

(87) International publication number:
**WO 2005/059771 (30.06.2005 Gazette 2005/26)**

(84) Designated Contracting States:
**DE ES FR GB IT NL**

(30) Priority: **15.12.2003 JP 2003416778**

(71) Applicant: **Laboratory for Language Technology**
**Ashiya-shi**
**Hyogo 659-0025 (JP)**

(72) Inventor: **JACOBSON, Yoko**
**Lab. for Language Technology Inc.**
**Ashiya-shi,**
**Hyogo 6590025 (JP)**

(74) Representative: **Fuhlendorf, Jörn**
**Patentanwälte**
**Dreiss, Fuhlendorf, Steimle & Becker,**
**Postfach 10 37 62**
**70032 Stuttgart (DE)**

# (54) TRANSLATION JUDGMENT DEVICE, METHOD, AND PROGRAM

(57) Suitable translations of phrases to be translated in original sentences having a high probability of obtaining natural translated sentences as sentences in a target language from the original sentences in a source language are obtained. A plurality of natural sentences, in the source language composed of a plurality of words, correlated with translated sentences in the target language is registered in corresponding translation database. When a phrase to be translated in natural sentences in the source language is specified, the corresponding translation database is searched for natural sentences containing the phrase to be translated (102). When no natural sentence completely coinciding with the original sentence is found (negative in 104), a degree of coincidence between each of the extracted natural sentences and the original sentence is evaluated, and a translation having the greatest degree of coincidence is displayed (108-112). When a plurality of natural sentences having the largest degree of coincidence is found (positive in 110), words having a high probability (correlation) of existing in the same sentence as the phrase to be translated are identified and translated sentences of natural sentences containing words having high correlation are displayed (114-118). When no natural sentences containing words having a high correlation are found (negative in 116), the original sentences are searched for words replaceable with targeted words (120-128), and the translated sentences of the natural sentences of which targeted words are replaced with the alternative words in the original sentence are displayed.

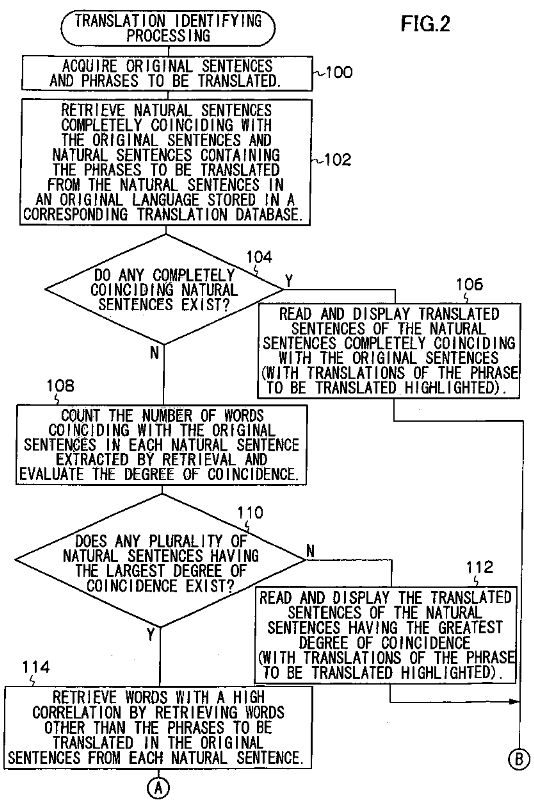

FIG.2

EP 1 703 419 A1

## Description

Field of the Invention

This invention relates to a system, method, and program for identifying a corresponding translation, more specifically, a translation identifying system that identifies at least a translation of a word to be translated in an original sentence written in a source language, a method for identifying a translation applicable to the translation-identifying system, and a program for allowing a computer to function as the aforementioned translation-identifying system.

Description of related art

Realization of a machine translation system that translates a sentence (an original sentence) described in a certain natural language (a source language) into a sentence (translated sentence) described in another language (a target language) has been expected for a long time, and various improved technologies relating to the machine translation have been proposed.

For example, Patent Document 1 discloses a technology wherein a set of expression forms represented by a phrase is stored in an English-Japanese phrase dictionary installed on an HD device, an expression form composed of words coupled by a coordinating conjunction is retrieved in English text in a syntax analysis process, and when the retrieved expression forms are stored in the English-Japanese phrase dictionary, or when a prefix or a suffix of a word composing the retrieved expression form is identical, the retrieved expression form is recognized as a morpheme to analyze a sentence structure without separating the words.

Moreover, Patent Document 2 discloses a technology wherein a characteristic table correlating meanings and characteristics of each multivocal word is stored in advance, a characteristic record of the entered original sentence written in the first language is produced, and a meaning of a multivocal word is selected and displayed based on a characteristic possessed by the original sentence by comparing the produced characteristic table with the stored characteristic table.

Patent Document 1 : Publication number 11-328178
Patent Document 2 : Publication number 6-314294

Summary of the invention

Problem to be solved by the invention

The work of translating an original sentence described in a source language into a translated sentence described in a target language is done through a translation process wherein words in the original sentence described in the source language are converted to words of the target language, and the converted words are rearranged according to a grammatical rule of the target language based on the recognition that a sentence is usually composed of words and a grammar. This translation process is adopted by the machine translation that performs translation using a computer, where the system that corresponding translations are registered in a dictionary by word unit, words are extracted from the original sentence in sequence, corresponding translation of the extracted words are repetitively retrieved to replace the original sentence with a corresponding translation by word unit, a sentence structure is analyzed by identifying a part of speech of each word, and the corresponding translations by word unit are rearranged according to the grammatical rules of the target language based on the results of an analysis of the sentence structure to obtain translated sentences (corresponding translations) is generally used.

In machine translation, even if a stereotyped phrase exists in the original sentence, there is a possibility that a suitable translation of the abovementioned phrase is obtained by applying the technology described in Patent Document 1, and even if a multivocal word exists in the original sentence, there is a possibility that a specific translation of the abovementioned multivocal word is obtained by applying the technology described in Patent Document 2. (Where the technology described in Patent Document 2 requires complicated work such that a multivocal word is extracted and meanings and characteristics of the extracted multivocal word are analyzed to prepare a characteristic table in advance.)
However, in the machine translation, since it often happens that the translated sentence is found to be unnatural as a sentence of the target language even if the obtained translation has no grammatical errors and translation by word unit has no errors, actual circumstances are that translation accuracy suitable for practical use cannot be obtained by the existing machine translation technologies even if the technologies described in, for example, Patent Documents 1 and 2 are applied.

The causes of these circumstances are estimated to be the fact that the translation processes adopted in the machine translation differs significantly from the process of creating a sentence when people speak or write a sentence in their native language.
That is to say, when people speak or write a sentence in their native language, the process wherein they retrieve words and create sentences by applying grammatical rules to the words is not used, but they actually create sentences by connecting suitable words, phrases, and sentences which they retrieved (selected depending on a situation) from a huge number of chunks (mass of meanings: words, phrases, stereotyped expressions, collocations, sentence structures, and sentences) accumulated in an individual brain based on the relation to the contextual words before and after the word concerned and the background knowledge associated with the phrase itself.
Therefore, natural translations as sentences in the target language can be obtained by seeking corresponding translations of the original sentence after recognizing the contextual relations to the words before and after the word concerned, the background knowledge associated with the phrases themselves, and the units (that is to say, chunks) that people retrieve when they speak or write in their native language in the same way as when people speak or write in their native language. However, actual circumstances were that creation of translated sentences by seeking corresponding translations by chunks was not yet realized in the machine translation system because it is not easy to identify the context or the background knowledge associated with phrases themselves, and punctuation of chunks is obscure.
This invention was established taking the abovementioned facts into consideration, and has a purpose to obtain corresponding translation-identifying systems, corresponding translation identifying methods, and programs.

Measures to work out the assignment

In order to achieve the abovementioned purpose, the translation-identifying system relating to the invention according to Claim 1 comprises a storage means for storing a plurality of natural sentences composed of a plurality of words in the source language by correlating the natural sentences with the translations in the target language, a retrieval means for retrieving natural sentences containing phrases to be translated in the original sentence of the source language from a plurality of natural sentences in the source language stored in the aforementioned storage means, and a corresponding translation identifying means for determining a degree of coincidence between the natural sentence extracted by the retrieval according to the aforementioned retrieval means and the aforementioned original sentence, and identifying the translations composed of, at least, the aforementioned phrases to be translated in the corresponding translation of the natural sentence selected on the basis of a determined degree of coincidence as the translation of, at least, the aforementioned phrases to be translated in the aforementioned original sentence.
In the invention according to Claim 1, natural sentences composed of a plurality of words in the source language are stored in the storage means by correlating the natural sentences with the translations in the target language.
The natural sentence relating to this invention is at least one of a sentence, a clause, a phrase, a stereotyped expression, and a collocation that are not subjected to editing or processing, such as division by word unit and extraction of multivocal words as in a dictionary in a conventional machine translation system, eliminates the necessity of providing a multivocal word with many corresponding translations as in the case of registration in a dictionary by word unit by storing these natural sentences by correlating these sentences with the translations in the target language (when a multivocal word is correlated with many translations, there is a possibility of erroneous selection because a suitable translation must be chosen) and can transform the translation corresponding to a natural sentence to natural sentences in the target language.
Moreover, words and their corresponding translations in addition to the natural sentences may be stored in the storage means in this invention.
In the invention according to Claim 1, a natural sentence that contains phrases to be translated in the original sentence described in the source language (any one of a sentence, a clause, a phrase, a stereotyped expression and a collocation) is retrieved by the retrieval means from a plurality of natural sentences in the source language stored in the storage means.
The phrase to be translated that means the phrase especially to be translated in the original sentence may be a word or may be composed of a plurality of words.
For example, when the translation-identifying system relating to this invention is used by a person (translator) as an electronic dictionary for translation work, the phrase to be translated is specified by the translator.
Moreover, for example, when the translation-identifying system relating to this invention is used as a part of a machine translation system or an automatic interpretation system, the phrase to be translated is specified by the machine translation system or the automatic interpretation system that performs machine translation using the corresponding translation identified by the translation-identifying system relating to this invention.
In addition, the original sentence containing the phrase to be translated may alsobe specified by a user (translator, etc.) or may be specified automatically (for example, a sentence or a clause containing the phrase to be translated is automatically identified as the original sentence).
Since the retrieval means retrieves a natural sentence containing a phrase to be translated, this retrieval results in extraction of a natural sentence containing a translation of the phrase to be translated in the corresponding translation.

The first translation identifying means according to Claim 1 determines a degree of coincidence between the natural sentence extracted by the retrieval of the retrieval means and the original sentence and identifies at least a translation of the phrase to be translated in the corresponding translation of a natural sentence selected on the basis of the determined degree of coincidence as the translation of, at least, the phrase to be translated in the original sentence. Thus a natural sentence similar to the original sentence among natural sentences extracted by the retrieval of the retrieval means (for example, a natural sentence used with the same meaning as the multivocal word existing in the original sentence) is selected with high probability as a natural sentence with a high degree of coincidence, a natural translation corresponding to the selected natural sentence is obtained, and the translation of, at least, the phase to be translated in the translations are identified as the translation of the phrase to be translated in the original sentence (it is a matter of course that the translation of a phrase other than the phrase to be translated in the corresponding translation can be identified as the translation of the phrase in the original sentence depending on the degree of coincidence with the original sentence).

Thus the invention according to Claim 1, considering the great technical difficulty of identifying punctuation of chunks in the original sentence, stores a plurality of natural sentences in the source language that correspond to the translations in the target language, selects a natural sentence having a high degree of coincidence with the original sentence in the source language from the stored natural sentences, and identifies the translation in the natural translations corresponding to the selected natural sentences as the translation of, at least, the phrase to be translated in the original sentence. Therefore the invention enables the obtaining of natural translations equal to the translation corresponding to the original sentence performed generally by chunk as a result that it is not necessary to identify the punctuation of the chunk in the original sentence and enables the obtaining of suitable translations of the phrases to be translated in the original sentence (the translation having a high probability of obtaining from the original sentence a natural translation as a sentence in the target language).

Since the invention according to Claim 1 can be realized by storing natural sentences and their corresponding sentences in the storage means, it is not necessary to perform complicated editing and processing, such as dividing natural sentences by word unit, extracting multivocal words, and listing translations of the multivocal words as much as possible to correlate each word when storing natural sentences and their corresponding translations in, at least, the storage means. Moreover, since the invention according to Claim 1 determines a degree of coincidence between a natural sentence extracted by the retrieval of the retrieval means and the original sentence, and can obtain the suitable translation by selecting a natural sentence based on the determined degree of coincidence, it is not necessary to perform complicated processing, such as identification of a part of speech and an analysis of sentence structure as in the conventional machine translation system, and can simplify the processing.

Since the invention according to Claim 1 stores natural sentences and their corresponding translations in the storage means, there is a possibility that a natural sentence that completely coincides with the original sentence is stored in the storage means.

Considering this, as described in, for example, Claim 2, it is preferable that the translation identifying means also retrieves the natural sentence completely coinciding with the original sentence from a plurality of natural sentences in the source language stored in the storage means, and that the first translation identifying means identifies the translation of the natural sentence completely coinciding with the original sentence as the translation of the original sentence when the natural sentence completely coinciding with the original sentence by the retrieval of the retrieval means is extracted.

Thus, when a natural sentence completely coinciding with the original sentence is stored in the storage means, the translation of the original sentence can be obtained.

In the invention according to Claim 1, a degree of coincidence between a natural sentence and the original sentence extracted by the retrieval can be obtained, for example, in the following manner.

That is to say, the invention according to Claim 3 has a characteristic that, in the invention according to Claim 1, the first translation identifying means evaluates a degree of coincidence with the original sentence by counting the number of words that coincide between the natural sentences and the original sentence extracted by the retrieval of the retrieval means so that the degree of coincidence with the original sentence becomes higher as the number of coinciding words increases.

The number of coinciding words is an important index representing the degree of coincidence between the natural sentences and the original sentence. By evaluating the degree of coincidence so that the degree of coincidence with the original sentence increases as the number of coinciding words increases, a natural sentence close to the original sentence can be selected on the basis of the degree of coincidence with high accuracy.

In the invention according to Claim 3, although it is possible to directly use the counted number of coinciding words as the degree of coincidence, it is preferable to use the value obtained by dividing the counted number of coinciding words by the number of words composing the phrases to be translated as the degree of coincidence as described in, for example, Claim 4.

Since, by this process, the degree of coincidence relating to this invention becomes the value that is obtained by normalizing the number of coinciding words based on the number of words composing the phrases to be translated, it is possible to select the natural sentence close to the original sentence with high accuracy using this degree of coincidence without relating to the number of words composing the phrases to be translated.

In order to count the number of coinciding words, it is acceptable to distinguish the number of words composing the phrases to be translated from the other words and use the value that is obtained by summing the values (assessed value of the number of coinciding words) acquired by multiplying the number of words composing the phrases to be translated and the number of coinciding words of the words other than that by different weights (weights set so that the weight for words composing the phrases to be translated is heavier) as the number of coinciding words.

In the invention according to Claim 3, it is possible to allow the first translation-identifying system to count the number of mismatched words between the natural sentences and the original sentence extracted by the retrieval of the retrieval means and to evaluate the degree of coincidence with the original sentence so that the degree of coincidence with the original sentence increases as the number of words counted decreases, as described in Claim 5.

The number of mismatched words is also an important index representing the degree of coincidence between the natural sentences and the original sentence together with the number of coinciding words. Thus it is possible to further improve the accuracy of evaluating the degree of coincidence between the natural sentences and the original sentence by evaluating the degree of coincidence so that the degree of coincidence increases as the number of mismatched words decreases, using the abovementioned number of mismatched words in addition to the number of coinciding words described in Claim 3.

By the way, in the invention according to Claim 3, since natural sentences are stored in the storage means in this invention, once a word frequently appearing in natural sentences in the source language like "a," "the," "to," and "in" in English sentences is identified as a coinciding word, there is a possibility, when the original sentence contains many of these frequently appearing words, wherein a natural sentence actually not close to the original sentence may be selected as a natural sentence with a high degree of coincidence because of the frequently appearing words.

Considering this problem, it is preferable that the first translation identifying means excludes the predefined frequently appearing words from the words to be counted prior to counting the number of coinciding words as described in, for example, Claim 6.

Thus, since the influence of the frequently appearing words on the coinciding words can be eliminated, the number of coinciding words can be used as an index that reflects the degree of coincidence between natural sentences and the original sentences more accurately.

In the invention according to Claim 3 or 5, it is preferable that the first translation identifying means counts a word as a coinciding words by regarding the words with inflection due to singular/plural or tense as the coinciding words when counting coinciding or mismatched words as described in, for example, Claim 7.

The inflected words due to the singular/plural or the tense can be found by registering the words concerned in a table in advance and by investigating whether the word only of which an ending shows a mismatch is registered in the table or not.

Thus it is possible to exclude the influence of inflected words due to the singular/plural or the tense, which should be fundamentally regarded as the coinciding words, on the number of coinciding or mismatched words and also possible to use the number of coinciding or mismatched words as an index that reflects the degree of coincidence between the natural sentences and the original sentence more accurately.

In addition, it is also preferable to regard the words written in upper or lower case letters used in English sentences, and so on, as the coinciding word.

In the invention according to Claim 3, it is preferable that the first translation identifying means does not repetitively count the word used twice or more when counting the number of coinciding words as described in, for example, Claim 8.

Thus it is possible to exclude the influence of the coinciding words used twice or more on the number of coinciding words and also possible to use the number of coinciding words as an index reflecting the degree of coincidence between natural sentences and the original sentence more accurately.

Instead of avoiding a repetitive count as described above, it is possible to limit the maximum number of times of counting the number of coinciding words that was used twice or more to the predefined number n (n □ 2).

In the invention according to Claim 3 or 5, it is preferable that the first translation identifying means evaluates a degree of similarity of arranging an order of words between the natural sentences and the original sentence extracted by the retrieval of the retrieval means and evaluates the degree of coincidence with the original sentence so that the degree of coincidence with the original sentence increases as the degree of similarity of an arranged order of words increases as described in, for example, Claim 9.

Since a natural sentence sometimes has a different meaning (translation) depending on the arranged order of words even if the sentence contains the same words, it is possible to select a natural sentence close to the original sentence with high accuracy based on the degree of coincidence by evaluating the similarity of an arranged order of words as described above and evaluating the degree of coincidence so that the degree of coincidence increases as the similarity of an arranged order of words increases.

In the invention according to Claim 3 or 5, it is preferable that the first translation identifying means counts the number of mismatched words existing in words coinciding with the original sentence in natural sentences extracted by the retrieval of the retrieval means and evaluates the degree of coincidence with the original sentence so that the degree of coincidence with the original sentence increases as the number of mismatched words existing in coinciding words counted decreases as described in, for example, Claim 10.

Thus, the accuracy of the degree of coincidence is improved and a natural sentence close to the original sentence can be selected with high accuracy based on the degree of coincidence.

Also in the invention according to Claim 1, it is sometimes difficult to identify (select) a natural sentence close to the original sentence based only on the degree of coincidence such that a plurality of natural sentences with the same degree of coincidence was extracted; although, it depends on what kind of natural sentences (and translations) are stored in the storage means.

Considering this problem, in the invention according to Claim 1, it is preferable that a search means for searching the natural sentences extracted by the retrieval of the retrieval means for the phrases to be translated and the frequently appearing words that frequently appear in the same text of the source language is additionally provided, that the first translation identifying means searches for the frequently appearing translations concerning phrases to be translated in natural sentences containing each of the phrases to be translated and specific frequently appearing phrases by referring to specific frequently appearing phrases found by the search means and existing in the original sentence, as well as the translations of natural sentences containing each of the phrases to be translated among the natural sentences extracted by the retrieval of the retrieval means and that the first translation identifying means identifies the frequently appearing translations as the translation of the phrase to be translated in the original sentence as described in, for example, Claim 11.

When a phrase to be translated and specific frequently appearing phrases that frequently appear (called correlation) in the same sentence in the source language exist in the original sentence, there is a high probability that the translation of the phrase to be translated coincides with the translation of the phrase to be translated in the corresponding translation of a natural sentence containing each of the phrases to be translated and specific frequently appearing phrases.

However, although there is a high probability that the phrases to be translated are identical to a suitable translation of the phrases to be translated in the corresponding translation of a natural sentence containing each of the specific frequently appearing phrases, there also is a possibility that natural sentences having unsuitable translations of phrases to be translated are mixed in the abovementioned natural sentences stored in the storage means.

Based on this, in the invention according to Claim 11, since frequently appearing phrases having a high correlation with phrases to be translated are searched for, frequently appearing translations for phrases to be translated and phrases to be translated in the translation of a natural sentence containing each of the specific frequently appearing phrases are found by referring to the specific frequently appearing phrases existing in the original sentence among the recognized frequently appearing phrases and the translation of a natural sentence containing each of the phrases to be translated.

Therefore, suitable translations of phrases to be translated in the original sentence (corresponding translation where there is a high probability that natural translations are obtained as sentences in the target language from the original sentence) can be obtained based on the frequently appearing phrases even if it is difficult to identify (select) a suitable natural sentence based only on the degree of coincidence.

It is difficult to identify the suitable translation taking the contexts before and after a word into consideration because there are many options depending on the situation. In the invention according to Claim 11 (and the invention according to Claim 14 to be described later), the corresponding translation of a phrase to be translated is identified by focusing on the phrase that frequently appears in the same text at the same time and by referring to the corresponding translation sentence of a natural sentence where this phrase and the phrase to be translated appear at the same time.

Therefore, it is not necessary to take the contexts before and after the original sentence into consideration. As a result, a suitable translation of a multivocal word can be obtained roughly considering the contexts before and after the original sentence.

It is possible to search for the abovementioned frequently appearing phrases by registering phrases that frequently appear in the same text of the source language in a table and referring to the table. In the invention according to Claim 11, since the frequently appearing phrases are found based on the natural sentences extracted by the retrieval of the retrieval means, there are two advantages wherein time and labor for preparing the abovementioned table can be saved, and the storage capacity required for storing the table can alsobe saved.

In the invention according to Claim 1, it is preferable that an identifying means for identifying an alternative phrase that can be replaced with a targeted phrase existing in the original sentence but not contained in the natural sentence existing in the original sentence extracted by the retrieval of the retrieval means is additionally provided, and the first translation identifying means identifies the translation of the alternative phrase identified by the identifying means and of at least the phrase to be translated in the corresponding translation sentence of a natural sentence containing each phrase to be translated among the natural sentences extracted by the retrieval of the retrieval means as the translation of at least the phrase to be translated in the original sentence as described in Claim 12.

In the invention according to Claim 1, a natural sentence where a specific phrase in the original sentence is replaced with another phrase is sometimes extracted by the retrieval of the retrieval means. In this case, if meanings of the original sentence and the natural sentence are similar, the specific phrase is considered to have a replaceable relation to the other phrase.

Even if, for example, a plurality of natural sentences having the same degree of coincidence with the original sentence is extracted by the retrieval of the retrieval means, when a natural sentence

where a specific phrase for the original sentence is replaced with the other phrase (alternative phrase) having a replaceable relation to the specific phrase exist in these natural sentences, it is preferable to select this natural sentence because there is a high probability that this natural sentence and the original sentence have the same meaning.

On the other hand, in the invention according to Claim 12, an alternative phrase that is replaceable with a targeted phrase extracted by the retrieval of the retrieval means and not contained in the natural sentence existing in the original sentence is identified by the identifying means, and the first translation identifying means identifies the translation of the alternative phrase identified by the identifying means and of at least the phrase to be translated in the corresponding translation sentence of a natural sentence containing each of the phrases to be translated among the natural sentences extracted by the retrieval of the retrieval means as the translation of at least the phrase to be translated in the original sentence. Therefore, even if it is difficult to identify (select) a suitable natural sentence based only on the degree of coincidence, a suitable translation of a phrase to be translated in the original sentence (the translation having high probability of obtaining from the original sentence a natural translation as a sentence in the target language) can be obtained based on the presence or absence of an alternative phrase.

Identification of an alternative phrase by the identifying means relating to the invention according to Claim 12 may be performed by registering phrases having replaceable relations with each other in a table and referring to this table. For example the identification may be performed by retrieving a natural sentence containing a targeted phrase from a plurality of natural sentences stored in the storage means, retrieving a natural sentence having a sentence structure identical to the natural sentence extracted by this retrieval from the natural sentences stored in the storage means, and identifying the phrase replaced with the targeted phrase in the natural sentence extracted by this retrieval as the alternative phrase as described in Claim 13.

Also, in this case, time and labor for preparing the abovementioned table can be saved, and the storage capacity required for storing the table can alsobe saved.

Since an immeasurable amount of background knowledge associated with phrases themselves having various properties depending on these phrases exist, it is difficult to extract all of them to classify into categories.

In the inventions according to Claims 12 and 13, since a phrase replaceable in the same sentence structure is identified as a phrase in the same category, it is possible to obtain suitable translations roughly based on the background knowledge associated with phrases themselves without obtaining background knowledge of entire phrases to classify them into categories.

The translation-identifying system relating to the invention according to Claim 14 comprises a storage means for storing a plurality of natural sentences composed of a plurality of words in the source language by correlating the natural sentences with the translations in the target language, a retrieval means for retrieving natural sentences containing phrases to be translated in the original sentence of the source language from a plurality of natural sentences in the source language stored in the aforementioned storage means, a search means for searching the natural sentences extracted by the retrieval by the aforementioned retrieval means for the aforementioned phrases to be translated and frequently appearing phrases that frequently appear in the same sentences of the source language, and a second translation identifying means for searching for the aforementioned phrases to be translated and the frequently appearing translations of phrases to be translated in the translation sentences of natural sentences containing each of the aforementioned specific frequently appearing phrases and for identifying the found frequently appearing phrases as the translations of at least the aforementioned phrases to be translated in the aforementioned original sentence by referring to specific frequently appearing phrases found by the aforementioned search means and existing in the aforementioned original sentence and referring to corresponding translation sentences of natural sentences containing each of the aforementioned phrases to be translated among natural sentences extracted by the retrieval of the aforementioned retrieval means.

In the invention according to Claim 14, a storage means and a retrieval means similar to the invention according to Claim 1 are provided. The search means searches the natural sentences extracted by the retrieval of the retrieval means for the phrases to be translated and the frequently appearing phrases that frequently appear in the same sentences of the source language. The second translation identifying means searches for the phrases to be translated and the frequently appearing translations for phrases to be translated in the translation sentences of natural sentences containing each of the specific frequently appearing phrases and identifies the found frequently appearing phrases as the translations of at least the phrases to be translated in the original sentence by referring to specific frequently appearing phrases found by the search means and existing in the original sentence and referring to corresponding translation sentences of natural sentences containing each of the phrases to be translated among natural sentences extracted by the retrieval of the retrieval means.

Thus in the same manner as the invention according to Claim 11, even if natural sentences having unsuitable translations of phrases to be translated are mixed in the natural sentences stored in the storage means and containing each of the phrases to be translated and specific frequently appearing phrases, suitable translations of phrases to be translated in the original sentence (the translation having high probability of obtaining from the original sentence a natural translation as a sentence in the target language) can be obtained without being affected by this problem.

In the invention according to Claim 1 or 14, although phrases to be translated may be composed of a plurality of words, there is a possibility that natural sentences containing all the phrases to be translated cannot be extracted even after the retrieval performed by the retrieval means when the number of words composing phrases to be translated increases. Considering this problem, when the phrase to be translated is composed of a plurality of words as described in, for example, Claim 15, it is preferable that the retrieval means retrieves a natural sentence containing at least one of a plurality of words composing phrases to be translated from a plurality of natural sentences in the source language stored in the storage means (that is to say, retrieves both natural sentences containing all the phrases to be translated and natural sentences containing a part of the phrases to be translated).

Thus, since phrases composed of many words as the phrases to be translated are specified now, natural sentences (corresponding translation sentences) from which the corresponding translations of at least the phrases to be translated can be obtained by the retrieval of the retrieval means even if natural sentences containing all the phrases to be translated are not stored in the storage means.

The translation identifying method relating to the invention according to Claim 16 comprises a first step for retrieving natural sentences containing phrases to be translated in the original sentence in the source language from natural sentences in the source language composed of a plurality of words stored in the storage means by correlating the natural sentences with the translations of the target language and a second step for determining a degree of coincidence between the natural sentences extracted by the retrieval in the aforementioned first step and the aforementioned original sentence and for identifying the translations of at least the aforementioned phrases to be translated in the corresponding translation sentences of natural sentences selected on the basis of the degree of coincidence determined above as the translations of the aforementioned phrases to be translated in the original sentence. Therefore in the same manner as the invention according to Claim 1, the suitable translations of the phrases to be translated in the original sentence (the translation having high probability of obtaining from the original sentence a natural translation as a sentence in the target language) can be obtained.

The translation identifying method relating to the invention according to Claim 17 comprises a first step for retrieving natural sentences containing phrases to be translated in the original sentence in the source language from natural sentences in the source language composed of a plurality of words stored in the storage means by correlating the natural sentences with the translations of the target language, a second step for searching the natural sentences extracted by the retrieval of the retrieval means in the aforementioned first step for the aforementioned phrases to be translated and the frequently appearing phrases that frequently appear in the same sentences of the source language, and a third step for searching for the aforementioned phrases to be translated and the frequently appearing translations for the phrases to be translated in the corresponding translation sentences of the natural sentences containing each of the aforementioned specific frequently appearing phrases and identifying the found frequently appearing translations as the translations of the aforementioned phrases to be translated in the original sentence by referring to the specific frequently appearing phrases found in the aforementioned second step and existing in the aforementioned original sentence among the natural sentences extracted by the retrieval in the aforementioned first step and referring to the corresponding translation sentences of the natural sentences each of which contains the aforementioned phrases to be translated. Therefore, in the same manner as the invention according to Claim 14, the suitable translations of the phrases to be translated in the original sentence (the translation having high probability of obtaining from the original sentence a natural translation as a sentence in the target language) can be obtained.

The program relating to the invention according to Claim 18 allows a computer connected to a storage means for storing a plurality of natural sentences in the source language composed of a plurality of words having corresponding translations in the target language to function as a retrieval means for retrieving natural sentences containing the phrases to be translated in the original sentence in the source language from a plurality of natural sentences in the source language stored in the aforementioned storage means and a first translation identifying means for determining a degree of coincidence between the natural sentences extracted by the retrieval of the retrieval means and the aforementioned original sentence and for identifying the translations of at least the aforementioned phrases to be translated in the translations of the natural sentences selected on the basis of the determined degree of coincidence as the translations of at least the aforementioned phrases to be translated in the aforementioned original sentence.

The program relating to the invention according to Claim 18 is a program for allowing a computer connected to a storage means for storing a plurality of natural sentences in the source language composed of a plurality of words having corresponding translations in the target language to function as the aforementioned retrieval means and the first translation identifying means. Therefore, when the abovementioned computer runs the program relating to the invention according to Claim 18, the computer functions as the translation identifying means according to Claim 1. Therefore in the same manner as the invention according to Claim 1, the suitable translations of the phrases to be translated in the original sentence (the translation having high probability of obtaining from the original sentence a natural translation as a sentence in the target language) can be obtained.

The program relating to the invention according to Claim 19 allows a computer connected to a storage means for storing a plurality of natural sentences in the source language composed of a plurality of words having corresponding translations in the target language to function as a retrieval means for retrieving the natural sentences containing the phrases to be translated in the original sentence in the source language from a plurality of natural sentences in the source language stored in the aforementioned storage means, a search means for searching the natural sentences extracted by the retrieval by the aforementioned retrieval means for the aforementioned phrases to be translated and the frequently appearing phrases that frequently appear in the same sentences of the source language, and a second translation identifying means for searching for the aforementioned phrases to be translated and the frequently appearing translations for the phrases to be translated in the corresponding translation sentences of the natural sentences each of which contains the aforementioned specific frequently appearing phrases and for identifying the found frequently appearing translations as the translations of the aforementioned phrases to be translated in the aforementioned original sentence by referring to the specific frequently appearing phrases found by the aforementioned search means and existing in the aforementioned original sentence among the natural sentences extracted by the retrieval by the aforementioned retrieval means and referring to the corresponding translation sentences of the natural sentences each of which contains the aforementioned phrases to be translated.

The program relating to the invention according to Claim 19 is a program for allowing a computer connected to a storage means for storing a plurality of natural sentences in the source language composed of a plurality of words having corresponding translations in the target language (either a computer in which a storage means is built or a computer connected to another computer connected to a storage means through telecommunication line) to function as the abovementioned retrieval means, search means, and second translation identifying means. Therefore, when the abovementioned computer runs the program relating to the invention according to Claim 19, the computer functions as the translation identifying means according to Claim 14. Therefore, in the same manner as the invention according to Claim 14, the suitable translations of the phrases to be translated in the original sentence (the translation having high probability of obtaining from the original sentence a natural translation as a sentence in the target language) can be obtained.

Effect of the invention

As described above, this invention retrieves natural sentences containing phrases to be translated in the original sentence in the source language from a plurality of natural sentences in the source language stored in the storage means, determines a degree of coincidence between the natural sentences extracted by the retrieval and the original sentence, and identifies the translation of at least the phrases to be translated in the translations of the natural sentences selected on the basis of the determined degree of coincidence as the translation of at least the phrases to be translated in the original sentence. Therefore, this invention has an excellent effect wherein the suitable translations of the phrases to be translated in the original sentence can be obtained in the condition that a high probability of obtaining natural translation sentences as sentences in the target language from the original sentence in the source language exists.

Moreover this invention searches phrases to be translated in the corresponding translations of the natural sentences each of which contains specific frequently appearing phrases for the phrases to be translated and the frequently appearing translations and identifies the found frequently appearing translations as the translations of the aforementioned phrases to be translated in the original sentence by retrieving natural sentences containing phrases to be translated in the original sentence in the source language from a plurality of natural sentences in the source language stored in the storage means, by searching the natural sentences extracted by the retrieval for the phrase to be translated and frequently appearing phrases that frequently appear in the same sentences of the source language and by referring to the corresponding translations of natural sentences each of which contain the specific frequently appearing phrases and the phrases to be translated existing in the original sentence. Therefore, this invention has an excellent effect wherein the suitable translations of the phrases to be translated in the original sentence can be obtained in the condition that a high probability of obtaining natural translation sentences as sentences in the target language from the original sentence in the source language exists.

Brief description of the drawings

Figure 1 is a block schematic diagram showing a configuration of a personal computer related to the preferred embodiment.

Figure 2 is a flow chart showing the contents of the translation identifying processing.

Figure 3 is a table showing an example of natural sentences and the corresponding translations including a word "operation" registered in a translation database.

Figure 4 is a block diagram for describing a mode where this invention is applied to a computer system to which a client personal computer and a server are connected through a network.

Figure 5 is a block schematic diagram showing a configuration of a machine translation system to which this invention is applied.

The Best Mode of Embodiment of the Invention

Now one of the preferred embodiments of this invention is described in detail and referenced by drawings. First, a mode where this invention is applied to an electronic dictionary system that provides a user with a translation of a specified phrase to be translated when the user specifies a phrase to be translated is described.

Figure 1 shows a personal computer (PC) 10 capable of functioning as the abovementioned electronic dictionary. PC 10 comprises a CPU 10A, a ROM 10B, a RAM 10C and an I/O port 10D, which are connected with each other through a bus 10E composed of a data bus, an address bus, a control bus, etc., to configure the PC.

A display 12 composed of a CRT, an LCD, etc., a keyboard 14 through which a user enters data, etc., a mouse 16, a hard disk drive (HDD) 18, a CD-ROM drive 20 that reads data from CD-ROM 24, and a scanner 22 capable of reading paper data are connected to the I/O port 10D as various I/O devices..

A translation-identifying program (corresponding to programs described in Claims 18 and 19) for allowing PC 10 to function as an electronic dictionary system is installed in HDD 18 of PC 10. A corresponding translation database (corresponding translation database) storing data that the aforementioned translation-identifying program uses for identifying a suitable translation is stored in this HDD 18.

There are several methods for installing (transferring) the translation-identifying program to a PC 10. For example, the translation-identifying program is installed by recording the translation-identifying program along with a setup program in CD-ROM 24 in advance, inserting the CD-ROM 24 into CD-ROM drive 20, and commanding CPU 10A to run the aforementioned setup program to read the translation-identifying program from CD-ROM 24 in sequence and to write the read translation-identifying program in HDD 18 in sequence.

The corresponding translation database can be stored in HDD 18 by, for example, recording the corresponding translation database in CD-ROM 24 in advance, and configuring the setup program so that the corresponding translation database is written in HDD 18 simultaneously when installing the translation-identifying program.

A large amount of text data of natural sentences composed of a plurality of words and described in the source language (either one of sentences, clauses, phrases, stereotyped expressions and collocations, which are not subjected to editing or processing such as division by word, extraction of multivocal words, etc., of which specific examples to be described later) having corresponding text data of translations described in a target language (these translations are also natural sentences not subjected to editing or processing such as division by word, extraction of multivocal words, etc.) are registered in the corresponding translation database. In this embodiment, HDD 18 storing the corresponding translation database corresponds to a storage means relating to this invention.

It is possible to use this corresponding translation database by recording the corresponding translation database on a recording medium, such as CD-ROM 24 and a DVD-ROM, and reading the corresponding translation database directly from this recording medium. Thus in this embodiment, the medium storing the corresponding translation database functions as the storage means relating to this invention.

Moreover, words in a source language and their corresponding translations in the target language are registered in the corresponding translation database relating to this embodiment.

The corresponding translation database relating to this embodiment can be created by adding natural sentences and their translations as required to an existing dictionary containing, for example, words in the source language and their corresponding translations.

Now an effect of this embodiment is described.

In this embodiment, when existence of a phrase (a phrase to be translated that may be a word or a phrase composed of a plurality of continuously arranged words in the original sentence), of which translation in the target language is desired, is found in the original sentence described in the source language, a user performs a specified operation for commanding an output of the translation of a phrase to be translated in the original sentence through PC 10.

The texts read in PC 10 as text data (for example text that a user entered through keyboard 14, text created using word processing software, text on the Web page viewed through the Internet, text obtained by reading character data by a scanner, and processing the data by OCR (Optical Character Recognition) system, etc.) can be used as the original sentence.

As the abovementioned operation, the operation, such as selecting an item corresponding to "corresponding translation output" in a context menu that is displayed by right-clicking a phrase to be translated, can be used after reversely displaying the phrase to be translated by selecting the phrase to be translated in the condition that, for example, the original sentence is displayed on display 12. It is also possible to specify the output of a translation of a phrase to be translated by performing an operation such as selecting the required icon displayed in, for example, the toolbar instead of using the context menu as described above.

When the abovementioned operation for specifying the output of the translation of the phrase to be translated is performed, CPU 10A of PC 10 runs the translation-identifying program to perform the translation identifying processing shown in Figure 2.

This translation identifying processing is processing to which the translation identifying method described in Claims 16 and 17 is applied. By performing this processing, PC 10 functions as an electronic dictionary system (the translation-identifying system described in Claims 1 and 14).

In translation identifying processing, text data of a single original sentence (original sentence to be processed) containing the specified phrase to be translated are first acquired in Step 100, and then information for identifying the phrase to be translated in the acquired original sentence to be processed is acquired.

The original sentence to be processed may be a sentence containing the phrase to be translated or may be either one of a clause, a phrase, a stereotyped expression, or a collocation containing the phrase to be translated. When either one of a clause, a phrase, a stereotyped expression, or collocation is assumed to be an original sentence to be processed, it is possible to allow the clause, phrase, stereotyped expression, or collocation as the original sentence to be processed to be specified by a user or to be automatically determined through the translation identifying processing.

In the next Step 102, a natural sentence completely coinciding with the original sentence to be processed is retrieved from natural sentences registered in the corresponding translation database using text data of the original sentence to be processed acquired in Step 100 as a key, and a natural sentence containing the phrase to be translated (a natural sentence partially coinciding with the original sentence because at least the phrase to be translated is contained) is retrieved from the natural sentences registered in the corresponding translation database using text data of the phrase to be translated as a key.

When the phrase to be translated is composed of a plurality of words, natural sentences containing at least one of a plurality of words composing the phrase to be translated is retrieved at the same time.

Step 102 corresponds to the retrieval means described in Claims 1 (more specifically Claims 2 and 15), 14, 18, and 19 and corresponds to the first Step described in Claims 16 and 17. Step 104 and the subsequent Steps correspond to the first translation identifying means described in Claims 1 and 18.

In Step 104, whether a natural sentence completely coinciding with the original sentence to be translated is extracted from the corresponding translation database by the retrieval in step 102 or not is asked.

If the answer is positive, the program moves to Step 106 to read the corresponding translations in the target language correlated with a natural sentence completely coinciding with the original sentence to be processed and registered in the corresponding translation database and to display the corresponding translations on display 12 to end the processing. When displaying these corresponding translations, the read translation is searched for the translation of the phrase to be translated and the translation of the found phrase to be translated is highlighted.

In this case a user can recognize the suitable translation of the specified phrase to be translated (the translation having high probability of obtaining from the original sentence a natural translation as a sentence in the target language) and can recognize the suitable translation of the original sentence to be processed containing the specified phrases to be translated (translation sentences natural as sentences in the target language).

The abovementioned Steps 104 and 106 correspond to the first translation identifying means described in Claim 2.

(Example 1)The abovementioned processing is further described using an actual example.

Assuming that a source language is English and a target language is Japanese, when "For your safety" contained in an original sentence to be processed "For your safety, don’t rush into the train" is specified as a phrase to be translated, the translation "安全" is selected against "safety" that composes the abovementioned phrase to be translated because the source language and the corresponding translation are registered word by word in a general translation process.

However, in the translation identifying processing relating to this embodiment, since natural sentences in the source language and their corresponding translations in the target language are registered in the corresponding translation database, there is a possibility that natural sentences completely coinciding with the abovementioned original sentences are registered in the corresponding translation database.

When natural sentences completely coinciding are registered in the corresponding translation database, the translations registered in the corresponding translation database correlated with the natural sentences are displayed with the translations of the phrases to be translated highlighted as shown below:

“危険ですから、駆け込み乗車はおやめ下さい。”

In the general translation process, it is difficult to select "危険" as the corresponding translation of the word "safety" and only an unnatural translation such as "Anata no anzen no tame, sono ressha ni kakekomanaide kudasai." is obtained. On the other hand, this invention provides a translation natural as native language.

When displaying the translations in Step 106, it is possible to allow natural sentences partially coinciding with the original sentence to be processed extracted by the retrieval in Step 102 to be displayed in addition to the natural sentences completely coinciding with the original sentence to be processed.

A plurality of the natural sentences partially coinciding with the original sentence to be processed is generally extracted by the retrieval. When displaying these, it is preferable to calculate a degree of coincidence to be described below for individual natural sentences partially coinciding with the original sentences to be processed in order to display the translation of each natural sentence on display 12 in the descending order of the degree of coincidence.

On the other hand, when the natural sentences completely coinciding with the original sentences to be processed are not found in the corresponding translation database by the retrieval in Step 102, the answer of the question in Step 104 is negative. Then the program moves to Step 108 to count the number of words coinciding with either one of words in the original sentence (number of coinciding words) among the words in the natural sentence as for natural sentences extracted from the corresponding translation by the retrieval in Step 102 (natural sentences partially coinciding with the original sentences to be processed) and to calculate the degree of coincidence with the original sentence based on the results of counting the number of coinciding words.

In this embodiment, when installing the translation-identifying program, a frequently appearing word table in which the words frequently appearing in natural sentences in the source language (for example, "a," "the," "to," and "in" in natural English sentences) is also stored on HDD 18.

The number of coinciding words is counted in Step 108 while referring to the frequently appearing word table to exclude the words registered in the frequently appearing word table from the number of coinciding words to be counted.

Thus, the influence of the frequently appearing words on the number of coinciding words can be avoided.

The abovementioned processing in Step 108 corresponds to the first translation identifying means described in Claim 6.

In this embodiment, when installing the translation-identifying program, an inflected word table where words having different endings due to the difference of singular/plural or tense are registered is also stored in HDD 18.

When the number of coinciding words is counted in Step 108 and the words having only mismatching endings appear, whether the reason for a mismatching ending exists in the difference of the singular/plural or in the difference of the tense is asked, and the words having different endings due to the difference of the singular/plural or the tense are counted assumed as the coinciding words.

Instead of this, the system in which only irregular inflections are registered in the inflection word table and regular inflections (for example, "s" for plural form and "ed" for past tense) are automatically assumed to be the coinciding words is acceptable.

Thus, the influence of the words having different endings due to the singular/plural or the tense (words that should be fundamentally recognized as the coinciding words) on the number of coinciding words can be avoided.

The abovementioned processing in Step 108 corresponds to the first translation identifying means described in Claim 7.

In this embodiment, a word once counted as the coinciding words for the reason that the word coincides with a certain word in the original sentence during counting of the number of coinciding words in Step 108 are not counted twice even if the word reappears in a natural sentence, in order to avoid repetitively counting the coinciding words that appeared twice or more.

Thus even if the same coinciding word exists in multiple places of the natural sentence, the influence of this coinciding word on the number of coinciding words can be avoided.

The abovementioned processing in Step 108 corresponds to the first translation identifying means described in Claim 8.

A formula for calculating the degree of coincidence can be defined so that the degree of coincidence increases as the number of coinciding words increases. For example, a calculation formula for normalizing the number of coinciding words based on the number of words composing the phrases to be translated (degree of coincidence = number of coinciding words divided by number of words composing phrases to be translated) can be used.

The abovementioned processing in Step 108 corresponds to the first translation identifying means described in Claim 3 (more specifically Claim 4).

In the next Step 110, the degrees of coincidence calculated in each natural formula are compared to ask whether a plurality of natural sentences having the maximum degree of coincidence exists or not.

If the answer is negative, the program moves to Step 112 to read the corresponding translation sentence in the target language registered in the corresponding translation database having a corresponding natural sentence of the maximum degree of coincidence, to search the read translation sentence for the translation of the phrase to be translated, to display the read translation sentence on display 12 with the translation of the found phrase to be translated highlighted, and to end the processing.

In this case, the user can recognize a suitable translation of the specified phrase to be translated (the translation having high probability of obtaining from the original sentence a natural translation as a sentence in the target language).

In Step 112, in addition to the natural sentences having the maximum degree of coincidence among the natural sentences extracted by the retrieval in Step 102, the translated sentences of a plurality of natural sentences (a certain number of natural sentences in a descending order of the degree of coincidence, or all the natural sentences of which degree of coincidence is higher than the specified value) are also read from the corresponding translation database in a descending order of the degree of coincidence and displayed on display 12 at the same time.

If a plurality of natural sentences having the same degree of coincidence exists, the number of words mismatched with the original sentence in each natural sentence is counted, the translated sentence corresponding to the natural sentence having the same degree of coincidence is displayed in ascending order (from smaller) of the number of mismatched words in the corresponding natural sentences to display the translated sentence at the same time.

(Example 2) The abovementioned processing is further described using an actual example.

Assuming that a source language is English and a target language is Japanese, when a word "operation" contained in an original sentence to be processed, "The system suddenly came into operation," is specified and natural sentences (1) through (8) shown in Figure 3 are correlated with translated sentences (1) through (8) and registered in the corresponding translation database as natural sentences containing the phrase to be translated "operation," the natural sentences other than (3) shown in Figure 3 have the number of coinciding words with the original sentence of "1" with the degree of coincidence of 100% ("operations" in natural sentence (2) is also counted as a coinciding word as aforementioned) and natural sentence (3) has the number of words coinciding with the original sentence of "4" (the word "the" is excluded from the coinciding words to be counted as a frequently appearing word) with the degree of coincidence of 400%. Therefore, a translated sentence (3) correlated with natural sentence (3) and registered in the corresponding translation database is displayed with the phrase to be translated highlighted as shown below:

“システムが稼働し始めた。”

(Example 3) Assuming that a source language is English and a target language is Japanese, when a word "operation" contained in an original sentence to be processed, "A small business is exempt from the operation of the new law," is specified and natural sentences (1) through (8) shown in Figure 3 are provided with corresponding translated sentences (1) through (8) and registered in the corresponding translation database as natural sentences containing the phrase to be translated "operation," the natural sentences other than (2) have the number of words coinciding with the original sentence of "1" with the degree of coincidence of 100% and natural sentence (2) has the number of words coinciding with the original sentence of "4" (the word "the" is excluded from the coinciding words to be counted as a frequently appearing word) with the degree of coincidence of 400%. Therefore, a translated sentence (2) correlated with natural sentence (2) and registered in the corresponding translation database is displayed with the phrase to be translated highlighted as shown below:

“新法の適用”

The word "operation" in English sentences is a multivocal word for which a suitable translation is difficult to identify. As easily understood from the abovementioned Examples 2 and 3, a suitable natural sentence (translated sentence) where the multivocal word is used in the same meaning as the original sentence can be obtained by registering translated sentences correlated with natural sentences in the corresponding translation database and selecting a natural sentence (translated sentence) based on the degree of coincidence.

(Example 4) In the case of Chinese sentences, it is often difficult to identify the unit in which a translation should be obtained because it is difficult to distinguish a mass of meaning without knowing the Chinese language sufficiently. In this translation identifying processing relating to this embodiment, in order to solve this problem, natural sentences containing the specified phases to be translated are retrieved from the natural sentences registered in the corresponding translation database (when the phrase to be translated is composed of a plurality of words, natural sentences containing at least one of a plurality words composing the phrase to be translated are also retrieved at the same time) and translated sentences having a high degree of coincidence with the entire original sentences (including the translated sentences of natural sentences other than natural sentences having the highest degree of coincidence) are displayed. Therefore, a user can recognize the unit in which translation should be obtained from the original sentences and their suitable translations at the same time by referring to the displayed translated sentences.

For instance, here is a case of translating from a source language to a target language: an original Chinese expression "発展中国家" to a Japanese expression. When any one of the expressions of "発", "発展", "発展中", "発展中国"or"発展中国家" is specified as a target word or a phrase to be rendered, a list of the following natural expressions in parallel translation will be displayed in sequence as follows based on the coincidence. (Incidentally, the following concomitantly shows the coincidence when "発展中国家" is assigned as an object phrase to be rendered but it goes without saying that the individual coincidence will vary depending on a word or phrases specified.)

1. "発展中国家"="発展途上国" (Concordant number of words: 5; Coincidence: 100%)
2. "発展中国"="中国を発展させる"(Concordant number of words: 4; Coincidence: 80%)
3. "発展中"="発展中の"(Concordant number of words: 3; Coincidence: 60%)
4. "発展"="発展する、発展させる "(Concordant number of words: 2; Coincidence: 40%)
5. "発"="発する、出す"(Concordant number of words: 1; Coincidence: 20%)

Thus, a user can recognize the unit in which translation should be obtained from the original sentences (in this case "発展中国家") and their suitable translations at the same time by referring to the translated sentences listed up above.

When both an original sentence and a phrase to be translated are "発," each of the abovementioned natural sentences has the number of coinciding words "1" and the degree of coincidence 100%. However, since the number of mismatched words is different from each other, original sentences are listed in the following order different from the case of the original sentence

"発展中国家":

1. "発" (Number of mismatched words "0")
2. "発展" (Number of mismatched words "1")
3. "発展中" (Number of mismatched words "2")
4. "発展中国" (Number of mismatched words "3")
5. "発展中国家" (Number of mismatched words "4") In the similar way, when both an original sentence and a phrase to be translated are "発展," original sentences are also listed in the following order different from the case of the original sentence "発展中国家" or "発" based on the degree of coincidence and the number of mismatched words:

1. "発展" (Number of coinciding words "2," degree of coincidence 100% and number of mismatched words "0")
2. "発展中" (Number of coinciding words "2," degree of coincidence 100% and number of mismatched words "1")
3. "発展中国" (Number of coinciding words "2," degree of coincidence 100% and number of mismatched words "2")
4. "発展中国家" (Number of coinciding words "2," degree of coincidence 100% and number of mismatched words "3")
5. "発" (Number of coinciding words "1," degree of coincidence 50% and number of mismatched words "0") Even when the phrase to be translated is the same as this, translated sentences are listed in a suitable order according to the natural sentences as shown above if the original sentence is different. Therefore, a user can recognize a suitable translation corresponding to the original sentence by referring to the listed results of the translated sentences.

When a plurality of natural sentences having the maximum degree of coincidence exists, the answer to the question in Step 110 is positive. Then the program moves to Step 114 to perform a correlation analysis for selecting a natural sentence based on the phrases to be translated and the words that appear frequently in the same sentences of the source language (words having a high correlation with the phrase to be translated: corresponding to the frequently appearing phrases described in Claims 11, 14, 17 and 19) in Steps 114 and 116.

That is to say, in Step 114, whether the phrase to be translated and the words frequently appearing in the same sentence of the source language (words having a high correlation with the phrase to be translated) are contained in the original sentence to be processed or not is investigated by investigating whether each word other than the phrase to be translated in the original sentence to be processed (however, the frequently appearing words registered in the frequently appearing word table are excluded) is contained in each natural sentence extracted from the corresponding translation database by the retrieval in Step 102 or not.
In this processing, for example, the words having the number of times of appearing in each natural sentence greater than the specified number of times (once, twice or more) among each word other than the phrases to be translated in the original sentences to be processed can be identified as the word having a high correlation to the phrase to be translated.
The abovementioned Step 114 corresponds to the search means described in Claims 11, 14 and 19 and corresponds to the second Step described in Claim 17.

In the next Step 116, whether the words having a high correlation with the phrase to be translated are found by the retrieval in Step 114 or not is asked.
When the answer is positive, the program moves to Step 118 to refer to the translated sentences of the phrase to be translated and the natural sentences each of which contains the words having a high correlation with the phrase to be translated determined in Step 114 (words existing in the original sentence to be processed) among each natural sentence extracted from the corresponding translation database by the retrieval in Step 102, and to identify the frequently appearing translation of the phrase to be translated in the abovementioned natural sentences.
Specifically speaking for the frequently appearing translation of the phrase to be translated, when the phrase to be translated and a single natural sentence is extracted as a natural sentence containing each of the words having a high correlation with the phrase to be translated, the translation of the phrase to be translated in the natural sentences is identified as the frequently appearing translation. When a plurality of natural sentences is extracted as the abovementioned natural sentences, the translation of the most frequently appearing in the translations of the phrases to be translated in these natural sentences are identified as the frequently appearing translations.

As mentioned above, when natural sentences containing the phrases to be translated and containing words identical to the original sentence to be processed as the words having a high correlation with the phrases to be translated exist, there is a high probability that the natural sentence is a sentence that uses the phrase to be translated as a sentence having the same meaning as the original sentence. There is also a possibility that a natural sentence having different translations of the phrase to be translated is mixed in the abovementioned natural sentence.
On the other hand, in Step 118, the frequently appearing translations of the phrases to be translated in the abovementioned natural sentences are identified by referring to the translated sentences of natural sentences containing each of the phrases to be translated and the words having a high correlation with the phrase to be translated. Therefore, the suitable translations of the phrases to be translated in the original sentences to be processed can be obtained.

In Step 119, the translated sentences in the target language registered in the corresponding translation database correlated with the natural sentences in which the phrases to be translated are correlated with frequently appearing translations found in Step 118 are read from the natural sentences containing each of the phrases to be translated and the words having a high correlation with the phrases to be translated, and the read translated sentences are displayed on display 12 to end the processing with the translations of the phrases to be translated and the words having a high correlation with the phrases to be translated highlighted on the read translated sentences.
Also, in this case, a user can recognize a suitable translation of the specified phrase to be translated (the translation having high probability of obtaining from the original sentence a natural translation as a sentence in the target language).
The abovementioned Steps 116 through 119 correspond to the first translation identifying means described in Claim 11, the second translation identifying means described in Claims 14 and 19, and the third Step described in Claim 17, respectively.

Also in Step 119, in addition to the natural sentences containing each of the phrases to be translated and the words having a high correlation with the phrases to be translated and where the phrases to be translated are correlated with the frequently appearing translations among the natural sentences extracted by the retrieval in Step 102, the translations of a plurality of natural sentences (a certain number of natural sentences in the descending order of the degree of coincidence, or all the sentences having the degree of coincidence higher than the specified value) are read from the corresponding translation database in descending order of the degree of coincidence and simultaneously listed on display 12 in an order according to the degree of coincidence or the number of mismatched words.

(Example 5) The abovementioned processing is further described using an actual example. Assuming that an original language is English and an object language is Japanese, when a word "operation" contained in the original sentence to be processed, "I had an operation to remove a rectal cancer," is specified and the natural sentences (1) through (8) shown in Figure 3 and other natural sentences are registered in the corresponding translation database as the natural sentences containing the phrase to be translated "operation," it is difficult to select a most suitable natural sentence (translated sentence) only from the degree of coincidence because both the natural sentences (6) and (8) have the number of coinciding words of "2."
When one of the key words other than the phrase to be translated "operation" in the original sentence to be processed (for example "remove," "rectal" or "cancer") is retrieved from the natural sentences (1) through (8), "cancer" is extracted as a word having a high correlation with the phrase to be translated "operation" in the original sentence to be processed because the natural sentences (6) and (8) contain "cancer."

There is a high probability that the natural sentences containing the phrase to be translated "operation" and the word "cancer" having a high correlation are the sentences that use the phrase to be translated "operation" in the same meaning as the original sentence to be processed. However, there is also a possibility that the natural sentences in which the translations of the phrase to be translated differ from the phrase to be translated are mixed in the natural sentences that are registered in the corresponding translation database and that satisfies the abovementioned condition. In this example, the natural sentence (8) corresponds to this case.

Although the natural sentence (8) contains the phrase to be translated "operation" and the word "cancer" having a high correlation, the natural sentence (8) differs from the original sentence to be processed because the translation of the phrase to be translated "operation" is "操作."

In order to prevent incorrect identification of the translation of the phrase to be translated due to the influence of these natural sentences, the translated sentences of the natural sentences containing the phrase to be translated "operation" and the word "cancer" having a high correlation are referred to.

The phrase to be translated "operation" and the word "cancer" having a high correlation is contained in a natural sentence other than natural sentence (6) and a natural sentence in which the phrase to be translated "operation" is correlated with the translation 手術"" is registered in the corresponding translation database. Therefore, the frequently appearing translation of the phrase to be translated "operation" in the natural sentences containing the phrase to be translated "operation" and the word "cancer" having a high correlation is determined to be "手術," the natural sentence (6) that contains the phrase to be translated "operation" and the word "cancer" having a high correlation and in which the phrase to be translated is correlated with the determined frequently appearing corresponding translation is selected, and the translated sentence (6) correlated with the natural sentence (6) and registered in the corresponding translation database is displayed with the translation of the phrase to be translated and the word having a high correlation highlighted as shown below.

"ジョンさんの手術後、彼の癌は治った."

Therefore, also in this example, a suitable natural sentence (translated sentence) that uses the phrase to be translated "operation" in the same meaning as the original sentence is selected.

In Figure 3, although the number of natural sentences containing "operation" is restricted to simplify the description, more natural sentences are actually registered. When the original sentence to be processed is, for example, a sentence using the phrase to be translated "operation" in the meaning of "手術," the word such as "injury" or "hospital" is extracted as the word having a high correlation depending on the content of the original sentence to be processed. When the original sentence to be processed is, for example, a sentence using the phrase to be translated "operation" in the meaning of "稼働," the word such as "system" or "computer" is extracted as the word having a high correlation depending on the content of the original sentence to be processed. When the original sentence to be processed is, for example, a sentence using the phrase to be translated "operation" in the meaning of "適用," the word such as "law" is extracted as the word having a high correlation depending on the content of the original sentence to be processed.

Meanwhile, in case words with higher correlation with the object phrase to be rendered have not been extracted, the determination in Step 116 is negated, moving to Step 120 and further to 120 and 134 during the interval of which steps a scheme analysis is implemented selecting natural sentences based on the alternative words, i.e., equivalent to the alternative phrases as defined in claim 12, that can replace with focus words other than the target phrases to be rendered in the original text to be processed.

That is to say, the word existing in the original sentence to be processed in Step 120 and not existing in each natural sentence extracted from the corresponding translation database by the retrieval in Step 102 (targeted word) is identified.

In Step 122, a natural sentence containing the targeted word is retrieved from the natural sentences registered in the corresponding translation database.

When a plurality of the targeted words exists, the retrieval in Step 122 is performed for each word. In Step 124, a retrieval condition for retrieving each of the natural sentences ("natural sentence having the same sentence structure as the natural sentence extracted by the retrieval of natural sentences containing the targeted phase" described in Claim 13) only of which targeted word in each natural sentence extracted by the retrieval in Step 122 differs is defined to retrieve the natural sentence from the natural sentences registered in the corresponding translation database based on the defined retrieval condition.

In the next Step 126, whether the matching natural sentence is extracted by the retrieval in Step 124 or not is asked.

When each of the same translated sentences exists in the corresponding translation database only with the targeted word replaced with the other word,

there is a high probability that the aforementioned other word is an alternative word that can be used instead of the targeted word. Therefore, when the answer is positive, the program moves to Step 128 to recognize the word replaced with the targeted word in the natural sentences extracted by the retrieval as the alternative word for the targeted word. The abovementioned Steps 120 through 130 correspond to the identifying means described in Claim 12 (more specifically in Claim 13).

In Step 130, whether a natural sentence in which the targeted word is replaced with the alternative word exists in a plurality of natural sentences having the maximum degree of coincidence (this may be substituted by "degree of coincidence more than the specified value") or not is asked.

When a natural sentence in which targeted word is replaced with the alternative word exists in a plurality of natural sentences having the maximum degree of coincidence, it is determined that there is a high probability that the natural sentence concerned is a sentence that uses the phrase to be translated in the same meaning as the original sentence to be processed.

Therefore, if the answer is positive, the program moves to Step 132 to read the translated sentence of the target language registered in the corresponding translation database correlated with the natural sentence having the maximum degree of coincidence (this may be substituted by "degree of coincidence more than the specified value") and containing the alternative word instead of the targeted word, to search the read translated sentence for the translations of the phrase to be translated and of the alternative word, to display the read translated sentence on display 12 with the translation of the recognized phrase to be translated highlighted and with the translation of the alternative word marked so as to be recognized also as an alternative word, and to end the operation.

Also in this case, a user can recognize a suitable translation of the specified phrase to be translated (the translation having high probability of obtaining from the original sentence a natural translation as a sentence in the target language). The abovementioned Steps 130 and 132 correspond to the first translation identifying means described in Claim 12.

Also in Step 132, in addition to the natural sentences having the maximum degree of coincidence and containing the alternative word instead of the targeted word among the natural sentences extracted by the retrieval in Step 102, the translated sentences of a plurality of natural sentences (a certain number of natural sentences in the descending order of the degree of coincidence, or all the natural sentences having a degree of coincidence more than the specified value) are read in the descending order of the degree of coincidence and listed on display 12 in the order according to the degree of coincidence and the number of mismatched words at the same time.

(Example 6) The abovementioned processing is further described using an actual example.

Assuming that a source language is English and a target language is Japanese, when a word "have" is specified as the phrase to be translated in the original sentence to be processed containing "have lunch," a natural sentence containing "have breakfast" (a natural sentence that uses the phrase to be translated "have" in the same meaning as the original sentence to be processed) is registered in the corresponding translation database, a natural sentence containing "have lunch" is not registered, and an appropriate translated sentence cannot be identified even by investigation based on the degree of coincidence or a correlation analysis, the phrase to be translated in the original sentence to be processed ("have") or each word other than the words that are determined to have high correlation with the phrase to be translated (for example, "lunch") are assumed to be the targeted words, and the natural sentences containing each targeted word are retrieved.

Thus, as for the targeted word "lunch," the natural sentences containing, for example, "eat lunch" or "take a late lunch" are extracted.

Then the natural sentences in which only the targeted word in each natural sentence differs are retrieved from each of the natural sentences extracted by the aforementioned retrieval.

Thus as for the natural sentence extracted as a natural sentence containing, for example, the targeted word "lunch," natural sentences containing, for example, "eat breakfast" or "take a late breakfast" are extracted as the natural sentences in which only the targeted word differs.

Therefore, since the word "breakfast" can be judged as an alternative word highly interchangeable with the focus word "lunch", from among the natural sentences extracted by the initial search (retrieval of natural sentences containing the object phrase for rendition "have"), the parallel translation 食べる" for the object phrase for rendition "have" is emphatically displayed, and concomitantly, the parallel version, i.e., rendition for the alternative word "breakfast," which is "朝食" registered in the parallel translation DB in the form corresponding to the natural sentence, i.e., natural sentence containing the phrase "have breakfast" in which the alternative word "breakfast" is replaced with the focus word "lunch" is markedly output.

Therefore, also in this example, a suitable natural sentence (translated sentence) using the phrase to be translated "have" in the same meaning as the original sentence to be processed is selected.

Moreover, in similar cases such as even the judgment based on coincidence and the correlation analysis could not specify an adequate parallel rendition, the "have" in the original text containing "have cats" to be rendered was assigned as a target phrase for rendition but despite the natural sentences containing "have dogs" in the DB corpus, natural sentences containing "have cats" have not been entered, and also, when an adequate parallel rendition could not be specified even by the judgment based on coincidence and the correlation analysis, such words as "cats" are regarded as a focus word, exactly in the same way as above, since the word "dogs" can be judged as an alternative word highly interchangeable with the focus word "cats", from among the natural sentences extracted by the initial search (retrieval of natural sentences containing the object phrase for rendition "have"), the parallel translation "飼う" for the object phrase for rendition "have" is emphatically displayed, and concomitantly, the parallel version, i.e., rendition for the alternative word "dogs," which is 犬" registered in the parallel translation DB in the form corresponding to the natural sentence, i.e., natural sentence containing the phrase "have dogs" in which the alternative word "dogs" is replaced with the focus word "cats" is markedly output.

Therefore, also in this example, a suitable natural sentence (translated sentence) using the phrase to be translated "have" in the same meaning as the original sentence to be processed is selected.

(Example 7) Assuming that a source language is Japanese and a target language is English, when "かける" in an original sentence to be processed "お湯をかける" is specified as the phrase to be translated, a natural sentence "水をかける" (natural sentence using the phrase to be translated "かける" in the same meaning as the original sentence to be processed) is registered in the corresponding translation database, but "お湯をかける" is not registered, and an appropriate translated sentence cannot be identified even by the investigation based on the degree of coincidence or the correlation analysis because other natural sentences, such as"電話 をかける ," are registered, "お湯" in the original sentence to be processed is assumed to be the targeted word and the natural sentences containing the targeted word are retrieved. Thus, the natural sentences such as "お湯につける," "お湯をわかす," "お湯を流す," "お湯で 洗う," "お湯から引き上げる" and "お湯で温める" are extracted.

Then the natural sentences in which only the targeted word in each natural sentence differs are retrieved from each of the abovementioned extracted natural sentences.

As the results of this retrieval, the following words are obtained as the words replaceable with the targeted word "お湯"

"~ ni tsukeru"

…"ソース""しょうゆ""水""スーツケース""腕"

"~ わかす。"

…None

"~を流す。"

…"電気""水""番組""うわさ"

"~で洗う。"

…"シャンプー""スポンジ""塩水""水""石鹸"

"~から引き上げる。"

…"水""海底""会議""ゼロ"

"~で温める。"

…"電子レンジ""余熱"

Among the abovementioned words, the word 水"" frequently appears and the natural sentence "水をかける" exists. Therefore the word "水" can be determined as the alternative word having a high probability of being replaceable with the targeted word "お湯" in the original sentence to be processed "お湯を かける." Thus the translation correlated with the natural sentence 水をかける"," in which the targeted word "お 湯" is replaced with the alternative word "水," and registered in the corresponding translation database among the natural sentences extracted by the first retrieval (retrieval of the natural sentences containing the phrase to be translated "かける") is displayed with the translation ("pour") of the phrase to be translated "かける" highlighted and the translation ("water") of the alternative word marked as shown below.
"pour *water* into ~"
In the abovementioned translated sentence, "*...*" shows that the word "..." is an alternative word.
Therefore, also in this example, a suitable natural sentence (translated sentence) that uses the phrase to be translated "かける" in the same meaning of the original sentence to be processed is selected.

In the similar way, when "かける" in an original sentence to be processed "3 をかける" is specified as a phrase to be translated, a natural sentence "4 をかける" (natural sentence using the phrase to be translated "かける" in the same meaning as the original sentence to be processed) is registered in the corresponding translation database, but "3 をかける" is not registered, and an appropriate translated sentence cannot be identified even by investigation based on the degree of coincidence or a correlation analysis, the translation correlated with the natural sentence "4 wo kakeru," in which the targeted word "3" is replaced with "4," and registered in the corresponding translation database among the natural sentences extracted by the first retrieval (retrieval of the natural sentences containing the phrase to be translated "かける") is displayed with the translation ("multiply") of the phrase to be translated "かける" highlighted and with the translation ("four") of the alternative word "4" marked by assuming the words such as "3" to be the targeted word and determining the word "4" as the alternative word having high probability of being replaceable with the targeted word "3."
"multiply by *four*"
Therefore, also in this example, a suitable natural sentence (translated sentence) that uses the phrase to be translated "かける" in the same meaning of the original sentence to be processed is selected.

On the other hand, when the conforming natural sentence is not extracted in the retrieval of the natural sentences in which only the targeted word differs (when the answer in Step 126 is negative), or when the natural sentence in which the targeted word is replaced with the alternative word does not exist in a plurality of natural sentences having the maximum degree of coincidence (when the answer in Step 130 is negative), it is difficult to identify a suitable translated sentence. Therefore the program moves to Step 134 to read each of all the natural sentences extracted by the retrieval in Step 102 or the translated sentences correlated with a plurality of natural sentences in the descending order of the degree of coincidence (a certain number of natural sentences in the descending order of the degree of coincidence, or all the natural sentences having the degree of coincidence more than the specified value) and registered in the corresponding translation database, to search each of the read translated sentence for the translation of the phrase to be translated, to list the individual translated sentences on display 12 in order depending on the degree of coincidence and the number of mismatched words in descending order of the degree of coincidence of each natural sentence having the maximum degree of coincidence with the translation of the found phrase to be translated highlighted and to end the processing. In this case, a user can recognize some candidates for suitable translations of the specified phrase to be translated.

In this case, a user can recognize some candidates for suitable translations of the specified phrase to be translated.

In the abovementioned examples, although the mode for calculating the degree of coincidence using only the number of coinciding words is described, modes are not limited to this. It is acceptable to define the formula for calculating the degree of coincidence so that the degree of coincidence increases as the number of coinciding words between natural sentences and original sentences increases in order to calculate and evaluate the degree of coincidence based on the number of coinciding words and the number of mismatched words.

This mode corresponds to the invention according to Claim 5.

It is also acceptable to first evaluate the degree of coincidence only based on the number of coinciding words, to count the number of mismatched words when it is difficult to select a single natural sentence (translated sentence) even by performing a correlation analysis or a scheme analysis, and to select a natural sentence (translated sentence) having the minimum number of words mismatching the original sentence.

In evaluating the degree of coincidence, it is also acceptable to commonly use a degree of similarity of arranged order of a natural sentence and an original sentence, or the number of mismatched words in natural sentences existing in the words coinciding with the original sentence, in addition to the abovementioned number of coinciding words and number of mismatched words to evaluate the degree of coincidence so that the degree of coincidence with the original sentence increases as the similarity of arranged order of words between a natural sentence and an original sentence increases or to evaluate the degree of coincidence so that the degree of coincidence with the original sentence increases as the number of mismatched words existing between the coinciding words decreases.

The mode using the similarity of arranged order of words between a natural sentence and an original sentence corresponds to the invention according to Claim 9, and using the number of mismatched words existing between the coinciding words corresponds to invention according to Claim 10.

The evaluation of the degree of coincidence considering the similarity of arranged order of words between a natural sentence and an original sentence and the number of mismatched words existing between words coinciding with the original sentence can be specifically realized by, for example, the following processing:

That is to say, each word in the original sentence is provided with the first assessment value according to a difference (the number of words) from the phrase to be translated in the original sentence.

This first assessment value can be defined so that the first assessment value for the phrase to be translated in the original sentence is the largest, and the first assessment value for each word other than the phrase to be translated in the original sentence decreases as the difference from the phrase to be translated in the original sentence increases (as the number of words existing in-between increases).

For example, when an original sentence is composed of nine words A through J (original sentence = (A, B, C, D, E, F, G, H, J)) and the fourth word D in the original sentence is specified as a phrase to be translated, each word A through J in the original sentence can be provided with the following first assessment value:

A = 1.0, B = 2.0, C = 5.0, D = 10.0, E = 5.0, F = 2.0, G = 1.0, H = 0.5 and J = 0.2

Then, each natural sentence containing the phrase to be translated extracted from the corresponding translation database by the retrieval in Step 102 is searched for a coinciding word coinciding with any word in the original sentence among each word in the natural sentence to calculate the sum of the first assessment value already provided to each of the found coinciding words.

This sum of the first assessment value is assumed to be the degree of coincidence, and the translated sentences of each natural sentence extracted by the retrieval are displayed in the descending order of the degree of coincidence of each correlated natural sentence (the sum of the first assessment value).

For example, when natural sentences 1 through 5 having the following word arrangement are extracted by retrieval (where word X is an arbitrary word):

Natural sentence 1 = (D, X, X, E, F, G)
Natural sentence 2 = (D, X, E, F, G)
Natural sentence 3 = (D, E, F, G)
Natural sentence 4 = (A, B, X, C, X, D)
Natural sentence 5 = (D, E, F, G, H, J)

The sum of the first assessment value of each natural sentence is:

Natural sentence 1: 10.0 (word D) + 0 (word X) + 0 (word X) + 5.0 (word E) + 2.0 (word F) + 1.0 (word G) = 18.0

Natural sentence 2: 10.0 (word D) + 0 (word X) + 5.0 (word E) + 2.0 (word F) + 1.0 (word G) = 18.0

Natural sentence 3: 10.0 (word D) + 5.0 (word E) + 2.0 (word F) + 1.0 (word G) = 18.0

Natural sentence 4: 1.0 (word A) + 2.0 (word B) + 0 (word X) + 5.0 (word C) + 0 (word X) + 10.0 (word D) = 18.0

Natural sentence 5: 10.0 (word D) + 5.0 (word E) + 2.0 (word F) + 1.0 (word G) + 0.5 (word H) + 0.2 (word J) = 18.7,

where natural sentence 5 of the sum (the degree of coincidence) of the first assessment value is the largest.

The first assessment value is defined so that the values increases as the difference between the phrase to be translated in the original sentence and each word other than the phrase to be translated in the original sentence decreases. Therefore by evaluating each natural sentence containing the phrase to be translated based on the sum of the first assessment value as mentioned above, the natural sentence containing many words existing in the position close to the phrase to be translated in the original sentence, in other words, the natural sentence having high probability of containing many phrases composed of the phrase to be translated in the original sentence and the words located close to the phrase to be translated (the natural sentence of which similarity of arranged order of words with the original sentence is estimated to be high) can be evaluated as the natural sentence having higher degree of coincidence.

Furthermore, the coincidence, i.e., total value of the first evaluated value, in the natural sentences 1-4 is equivalent in the above case, and when there are multiple natural sentences with equivalent coincidence based on the first evaluated value as in this case, the second evaluated value is granted according to the interval, i.e., the number of words, from the target phrase for rendition in the respective natural sentences toward the word corresponding to either of the words in the original text among the respective words in the natural sentence regarding the respective natural sentences with equivalent coincidence based on the first evaluated value.

This second assessment value can alsobe defined so that the second assessment value for the phrase to be translated contained in each natural sentence is the largest and the value decreases as the difference from the phrase to be translated in each natural sentence increases (as the number of words existing in-between increases).

Thus the sum of the second assessment value provided to each coinciding word in each natural sentence having the same value of the degree of coincidence based on the first assessment value is calculated, and the translation of each natural sentence having the same value of the degree of coincidence based on the first assessment value is displayed in the descending order of the sum of the second assessment value of each correlated natural sentence (this is also included in the degree of coincidence relating to this invention).

For example, each coinciding word in the aforementioned natural sentences 1 through 4 is provided with the second assessment value to obtain the sum of the second assessment value as shown below.

In the example below, the second assessment value of the phrase to be translated is assumed to be 10.0, and the second assessment value is defined so that the second assessment value of the other coinciding words is assumed to decrease like 5.0, 2.0, 1.0, 0.5, 0.2, ... as the number of words existing between the phrases to be translated increases like 0, 1, 2, 3, 4, ....

Natural sentence 1: 10.0 (word D) + 0 (word X) + 0 (word X) + 1.0 (word E) + 0.5 (word F) + 0.2 (word G) = 11.7

Natural sentence 2: 10.0 (word D) + 0 (word X) + 2.0 (word E) + 1.0 (word F) + 0.5 (word G) = 13.5

Natural sentence 3: 10.0 (word D) + 5.0 (word E) + 2.0 (word F) + 1.0 (word G) = 18.0

Natural sentence 4: 0.2 (word A) + 0.5 (word B) + 0 (word X) + 2.0 (word C) + 0 (word X) + 10.0 (word D) = 12.7

Therefore, natural sentences 1 through 4 (translated sentences) are displayed in the descending order of the sum of the second assessment value, namely in the order of natural sentences 3, 2, 4, 1.

The second assessment value is defined so that the value increases as the difference between the coinciding word coinciding with any word in the original sentence among the words in each natural sentence and the phrase to be translated in each natural sentence decreases. Therefore the natural sentence containing a larger number of the words coinciding with the original sentence and containing the mismatched words existing between the coinciding words as small as possible, namely the natural sentence having a high probability that the natural sentence contains the phrase to be translated in the original sentence and the phrases composed of the words close to the phrase to be translated, can be evaluated as the natural sentence having higher degree of coincidence by evaluating each natural sentence containing the phrase to be translated based on the sum of the second assessment values.

The evaluation of the similarity of arranging order of words in natural sentences and original sentences and the degree of coincidence considering the number of mismatched words in the natural sentences existing between the original sentence and the coinciding words can alsobe realized by, for example, the following processing:

An upstream word having the shortest distance from the phrase to be translated (this time, an upstream word adjacent to the phrase to be translated) is extracted from an upstream word group existing in the upstream side of the phrase to be translated in the original sentence, and a downstream word having the shortest distance from the phrase to be translated (this time, a downstream word adjacent to the phrase to be translated) is extracted from a downstream word group existing in the downstream side of the phrase to be translated in the original sentence.

Then the position where the phrase to be translated exists is assumed to be the reference position in each natural sentence containing the phrase to be translated extracted from the corresponding translation database by the retrieval (when the phrase to be translated exists in a plurality of places in the natural sentence, the position where any phrase to be translated exists is assumed to be the reference position) to search the upstream region within the number of specified words (for example within three words) from the reference position to the upstream side for the upstream word already extracted and to search the downstream region within the number of specified words (for example within three words) from the reference position to the downstream side for the downstream word already extracted.

The natural sentence in which the upstream and downstream words are found by the abovementioned searching is provided with a third assessment value defined so that the value increases as the distances between the reference position and the upstream word and between the reference position and the downstream word decrease.

Then the upstream word not yet extracted and having the shortest distance from the upstream word group (this time, the upstream word between which and the phrase to be translated a single word (the upstream word used in the previous retrieval) exists) in the original sentence is extracted from the upstream word group, and the downstream word not yet extracted and having the shortest distance from the downstream word group (this time, the downstream word between which and the phrase to be translated a single word (the downstream word used in the previous retrieval) exists) in the original sentence is extracted from the downstream word group.

The region within the specified number of words (for example within three words) from the position in which the upstream word was found in the previous retrieval to the upstream side in each natural sentence in which the upstream and downstream words were found by the previous retrieval is searched for the upstream word previously extracted, and the region within the specified number of words from the position in which the downstream word was found in the previous search of the downstream position in each natural sentence in which the upstream and downstream words were found in the previous search is searched for the downstream word previously extracted.

The natural sentence in which at least one of the upstream and downstream words is found by the search this time is provided with the third assessment value that is defined so that the value increases as the distance between the position of the upstream or downstream word found by the previous search and the position of the upstream or downstream word found by the search this time decreases.

It is acceptable to use an assessment value that is equally defined only according to the distance between the position of the upstream or downstream word found by the previous search and the position of the upstream or downstream word found by the search this time as the abovementioned third assessment value as mentioned above. However, considering the distance between the phrase to be translated and the upstream or downstream word to be searched in the original sentence, it is acceptable to define the third assessment value so that the influence of the upstream or downstream word to be searched on the third assessment value becomes greater as the distance between the upstream or downstream word to be searched and the phrase to be translated in the original sentence decreases (so that the third assessment value to be provided decreases totally as the distance between the upstream or downstream word to be searched for and the phrase to be translated in the original sentence increases).
Also as described above, in place of setting down the third evaluated value in such a way as to increase the value along with the lessening interval in the natural sentence between the position of the anterior or posterior words detected in the preceding search and the position of the anterior or posterior words detected in the current search, the third evaluated value may be laid down so as to increase the value along with the lessening interval in the natural sentence between the position of the aforementioned reference position and the position of the anterior or posterior words detected in the current search.

The upstream and downstream words are extracted from the original sentence in ascending order of the distance from the phrase to be translated to repeat the above processing until the time any upstream or downstream word extractable from the original sentence remains no more. Then the sum of the third assessment values provided to each natural sentence is calculated and assumed to be the degree of coincidence, and the translation of each natural sentence extracted by the retrieval is displayed in the descending order of the degree of coincidence (the sum of the third assessment values) of each corresponding natural sentence.

For example, when an original sentence is composed of five words A through E (original sentence = (A, B, C, D, E)) and the third word C in the original sentence is specified as a phrase to be translated, first words B and D are extracted from the original sentence as an upstream word and a downstream word respectively to search the region within the specified number of words (for example within three words) from the phrase to be translated to the upstream side for the upstream word and to search the region within the specified number of words (for example within three words) from the phrase to be translated to the downstream side for the downstream word in each natural sentence containing the phrase to be translated extracted from the corresponding translation database by the retrieval to provide the natural sentence in which the upstream and downstream words are found with the third assessment value.
Then words A and E are extracted from the original sentence as an upstream word and a downstream word respectively to search the region within the specified number of words (for example within three words) from the upstream word to the upstream side for the upstream word A and to search the region within the specified number of words (for example within three words) from the downstream word D to the downstream side for the downstream word E in the natural sentence in which the upstream word B and the downstream word D were found to provide the natural sentence in which the upstream word A and the downstream word E were found with the third assessment value.

The abovementioned processing is applied to ten natural sentences (a) through (k) shown below and the sentences are arranged in the descending order of the sum of the third assessment value as shown below, where word X and "/" mean an arbitrary word and a punctuation mark respectively.

1. Natural sentence (a) = (A, B, C, D, E)
2. Natural sentence (b) = (A, B, C, D, /, B, C, D, E)
3. Natural sentence (c) = (B, C, D)
4. Natural sentence (d) = (A, B, C, X, D, E)
5. Natural sentence (e) = (A, B, C, X, D)
6. Natural sentence (f) = (A, B, C, /, C, D, E)
7. Natural sentence (g) = (A, X, B, C, X, D)
8. Natural sentence (h) = (B, C, /, C, D)
9. Natural sentence (j) = (B, X, C, /, C, X, D)
10. Natural sentence (k) = (B, X, X, C, /, C, X, X, D)

By providing each natural sentence containing the phrase to be translated with the third assessment value as shown above and evaluating based on the sum of the third assessment value, the natural sentence having high similarity of arranging order of word with the original sentence and having the number of mismatched words as small as possible existing between the words coinciding with the original sentence, that is to say, the natural sentence containing the original sentence in the condition that the natural sentence contains the mismatched words as small as possible (in the condition of high integrity) can be evaluated as the natural sentence having a higher degree of coincidence.

The evaluation considering the similarity of arranged order of words between the natural sentence and the original sentence and the number of mismatched words in the natural sentence existing between the words coinciding with the original sentence can be realized by, for example, the following processing:

First, the upstream word having the shortest distance from the phrase to be translated (this time the upstream word adjacent to the phrase to be translated) is extracted from the upstream word group existing in the upstream side of the phrase to be translated in the original sentence, then the position in which the phrase to be translated exists in the natural sentence is assumed to be the reference position in each natural sentence containing the phrase to be translated extracted from the corresponding translation database by the retrieval (when the phrase to be translated exists in each of a plurality of places in the natural sentence, the position in which any one of the phrase to be translated exists is assumed to be the reference position), and the region within the specified number of words (for example three words) from the reference position to the upstream side is searched for the upstream word previously extracted.

This processing counts the number of words by distance (more specifically the first number of words by distance and the second number of words by distance) as a fourth assessment value from each of the natural sentences containing the phrase to be translated, and measures the distance between the reference position and the upstream word in the natural sentence in which the upstream word was found in the abovementioned retrieval to determine the first number of words by distance according to each measured distance.

The upstream word not yet extracted and having the shortest distance from the phrase to be translated (the upstream word between which and the phrase to be translated a single word (the upstream word used for the previous retrieval) exists) is extracted from the upstream word group, the region within the specified number of words (for example, within three words) from the position in which the upstream word previously extracted was found in the previous searching to the upstream side in each natural sentence in which the upstream word was found in the previous search is searched for the upstream word previously extracted, the distance between the position of the upstream word found in the previous search and the upstream word found this time is measured, and the distance between the upstream word found in the previous search and the reference position is added to the measured distance to obtain the distance between the upstream word found in the search this time and the reference position and to determine the first number of words by distance according to each of the obtained distances.

The upstream words are extracted from the original sentence in the ascending order of the distance from the phrase to be translated to repeat the abovementioned processing until the time any upstream word extractable from the original sentence remains no more.

For example, when an original sentence is composed of five words A through E (original sentence = (A, B, C, D, E)) and the fourth word D in the original sentence is specified as the phrase to be translated, first, the word C is extracted from the original sentence as an upstream word, and the region within the specified number of words (for example, three words) from the phrase to be translated to the upstream side in each natural sentence containing the phrase to be translated extracted from the corresponding translation database by the retrieval is searched for the upstream word to determine the first number of words by distance in the natural sentence in which word C was found.

An example of a result of counting the first number of words by distance at this point is shown in Table 1 below:

Table 1.

Then word B is extracted from the original sentence as the upstream word, and the region within the specified number of words (for example, three words) from the upstream word C to the upstream side in the natural sentence in which the upstream word C was found in the previous searching is searched for the upstream word B to determine the first number of words by distance in the natural sentence in which the upstream word B was found.

An example of a result of counting the first number of words by distance at this point is shown in Table 2 below:

Table 2.

Further, word A is extracted from the original sentence as the upstream word, and the region within the specified number of words (for example, three words) from the upstream word B to the upstream side in the natural sentence in which the upstream word B was found in the previous searching is searched for the upstream word A to determine the first number of words by distance in the natural sentence in which the upstream word A was found.

An example of a result of counting the first number of words by distance at this point is shown in Table 3 below:

[改行]

Table 3.

The distance between words is measured in each natural sentence containing the phrase to be translated extracted from the corresponding translation database by the retrieval in a method different from the abovementioned first number of words by distance to sum up as the second number of words by distance.

More specifically, in the condition that the existence of the upstream word adjacent to the phrase to be translated among the upstream word group in the original sentence is ignored (word C contained in each natural sentence is regarded as an arbitrary mismatch of word X), the upstream word having the shortest distance from the phrase to be translated is extracted from the upstream word group in the original sentence, and the position in which the phrase to be translated exists in each natural sentence is assumed to be the reference position in each natural sentence containing the phrase to be translated extracted from the corresponding translation database by the retrieval to search the region within the specified number of words (for example, three words) from the reference position to the upstream side for the extracted upstream word.
The distance between the reference position and the upstream word (more specifically, the number of mismatched words existing between the reference position and the upstream word) is measured in the natural sentence in which the upstream word was found in the previous searching, and the distance obtained by adding "1" to the measured distance is assumed to be the distance of the reference position to determine the second number of words by distance according to each distance from the reference position.

[改行]

The upstream word not yet extracted and having the shortest distance from the phrase to be translated is extracted from the upstream word group, the region within the specified number of words (for example, three words) from the position of the upstream word found in the previous search is searched for the previously extracted upstream word in each natural sentence in which the upstream word was found in the previous search, the distance between the position of the upstream word found in the previous search and the upstream word found this time is measured in the natural sentence in which the upstream word is found in the search this time, and the distance between the upstream word found in the previous search and the reference position is added to the measured distance to obtain the distance between the upstream word found in the search this time and the reference position and to determine the second number of words by distance according to the obtained distance.
The upstream words are extracted from the original sentence in the ascending order of the distance from the phrase to be translated to repeat the abovementioned processing until the time any upstream word extractable from the original sentence remains no more.

[改行]

For example, when an original sentence is composed of five words A through E (original sentence = (A, B, C, D, E)) and the fourth word D in the original sentence is specified as the phrase to be translated, first in the condition that existence of the upstream word C adjacent to the phrase to be translated among the upstream word group in the original sentence is ignored, word B and word A are extracted from the original sentence in sequence to measure the distance from the reference position in each natural sentence to obtain the result of measurement as shown in Table 4 below:
[Table 4]
The second number of words by distance is determined based on the abovementioned measurement result to obtain the counting result of the second number of words by distance as shown in Table 5.
[Table 5]
As mentioned above, when the counting of the first number of words by distance and the counting of the second number of words by distance concerning the upstream word group in the original sentence are finished in each natural sentence containing the phrase to be translated, the counting results of the first number of words by distance and the second number of words by distance are compared in each natural sentence, and the counting result showing the result that the distance between words is smaller is selected from the first number of words by distance and the second number of words by distance as a final evaluation.
More specifically, for example, a natural sentence (A, B, C, D) has a distance of 0 and the number of words 3 in the first number of words by distance, while the natural sentence has the number of words 0 at a distance of 0, the number of words 0 at a distance of 1 and the number of words 2 at a distance of 2 in the second number of words by distance as shown in Table 5. Therefore, the first number of words by distance having larger number of words at a distance of 0 is selected as the final evaluation for the upstream word group of the natural sentence (A, B, C, D).
The abovementioned example is for the case that the numbers of words at a distance of 0 of the first number of words by distance and the second number of words by distance are different. When the numbers of words at a distance 0 are identical to each other, the numbers of words at distances 1, 2, ... are compared in sequence and the number of words having larger number at the same distance is selected from the first number of words by distance and the second number of words by distance as the final evaluation.

The purpose of counting the second number of words by distance is to correctly evaluate the similarity of the arranged order of words with the original sentence also for the natural sentence in which the order of a part of words is changed from the original sentence.

For example, in a natural sentence (C, A, B, D), the number of words is 0 at a distance of 0, the number of words 0 at a distance of 1 and the number of words 1 at a distance 2 in the first number of words by distance, while the number of words is 0 at a distance of 0, the number of words 2 at a distance of 1, and the number of words 0 at a distance of 2 in the second number of words by distance. Thus, the second number of words by distance is selected as the final evaluation for the upstream word group in the abovementioned natural sentence.

In the abovementioned example, the counting result for the first number of words by distance is evaluated by regarding the natural sentence (C, A, B, D) as (C, X, X, D), while the counting result for the second number of words by distance is evaluated by regarding the natural sentence (C, A, B, D) as (X, A, B, (word C removed), D). Therefore, the abovementioned natural sentence can be evaluated that the original sentence is contained in the condition of higher integrity.

When the final evaluation is determined by performing the abovementioned processing for each natural sentence containing the phrase to be translated extracted from the corresponding translation database by the retrieval, the similar processing (counting of the first number of words by distance and the second number of words by distance, and determination of the final evaluation concerning the downstream word group) is performed using the downstream word group existing in the downstream side of the phrase to be translated in the original sentence for each of the abovementioned natural sentences.

Then the obtained final evaluation for the upstream word group and the final evaluation for the downstream word group are summed (the number of words by distance in each final evaluation is summed by the same distance) for each natural sentence to obtain a comprehensive evaluation for each natural sentence.

The translated sentence of each natural sentence is displayed in ascending order of the distance between words shown by the comprehensive evaluation for each of the corresponding natural sentences based on the comprehensive evaluation for each natural sentence.

More specifically, for example, by repeating rearrangement of each natural sentence in the descending order of the number of words at a distance of 0 and the subsequent rearrangement of the natural sentence having the same number of words at a distance of 0 in descending order of the number of words at a distance of 1 while increasing the distance corresponding to the number of words to be compared at an increment of 1, each sentence is rearranged in ascending order of the distance between words shown by the comprehensive evaluation, and the translated sentences corresponding to each natural sentence are displayed.

And, the translated sentences corresponding to each natural sentence are displayed.

According to this, nine natural sentences (a) through (j) shown below are processed as mentioned above to rearrange the natural sentences based on the comprehensive evaluation, resulting in the following order:

[改行]

1. Natural sentence (a) = (A, B, C, D, E)

[改行]

2. Natural sentence (b) = (A, B, C, D, /, B, C, D, E)
3. Natural sentence (c) = (A, B, C, X, D)
4. Natural sentence (d) = (B, C, D)
5. Natural sentence (e) = (A, X, B, C, X, D)
6. Natural sentence (f) = (B, C, X, D)

[改行]

7. Natural sentence (g) = (B, C, /, C, D)
8. Natural sentence (h) = (B, X, C, /, C, X, D)
9. Natural sentence (j) = (B, X, X, C, /, C, X, X, D)

In the abovementioned processing, the counting of the second number of words by distance is not essential. When it is not necessary to evaluate the natural sentence for which words are partially rearranged from the original sentence, it is acceptable to omit the counting of the second number of words by distance and use the first number of words by distance as the final evaluation.

It is a matter of course that the evaluation of degree of coincidence and selection or rearrangement of natural sentences based on the abovementioned first assessment value and the second assessment value/third assessment value/fourth assessment value (the first number of words by distance and the second number of words by distance) can be commonly used with evaluation, selection, or rearrangement of natural sentences by a correlation analysis or a scheme analysis. The mode for evaluating the degree of coincidence of natural sentences based on the first assessment value and the second assessment value or the third assessment value is more suitable for the case when retrieving the translated sentence to be used for reference as for the phrases within the range narrower than the entire original sentence, such as phrases existing in the original sentences in comparison with the modes, etc., for evaluating the degree of coincidence using only the number of coinciding words between the original sentence and the natural sentence. For example, it is acceptable to provide a retrieval mode, such as a phrase retrieving mode, in addition to the general retrieval mode, and to perform the evaluation of the degree of coincidence based on the first assessment value and the second assessment value or the third assessment value and the selection or rearrangement of the natural sentences when this phrase retrieval mode is selected.

Although an example wherein the degree of coincidence is first calculated to select a natural sentence (identify the corresponding translation), a natural sentence is selected (corresponding translation is identified) by a correlation analysis when the suitable natural sentence cannot be narrowed only based on the degree of coincidence, and a natural sentence is selected (corresponding translation is identified) by a scheme analysis when the suitable natural sentence cannot be narrowed down even based on the correlation analysis was described above, the application is not limited to this. It is acceptable to calculate the degree of coincidence for individual natural sentences containing the phrase to be translated extracted by the retrieval of the retrieval means, to evaluate the individual natural sentences by performing the correlation analysis and the scheme analysis, and to select a natural sentences according to the priority order, for example, shown in Table 6 below based on the evaluation results.

Table 6.

[改行]

Furthermore, it is acceptable to calculate the degree of coincidence for individual natural sentences, to perform each of the correlation analysis and the scheme analysis, and to select the natural sentence having the largest comprehensive evaluation score.

$$\text{Comprehensive evaluation score} = a \times (\text{degree of coincidence}) + b \times (\text{correlation evaluation score}) + c \times (\text{scheme evaluation score})$$

where the correlation evaluation score is an evaluation score provided to the individual natural sentences based on the result of the correlation analysis, the scheme evaluation score is an evaluation score provided to the individual natural sentences based on the result of the scheme analysis, and a, b and c are predefined factors.

The program was formulated in the translation identifying processing (Figure 2) previously described so that whether the natural sentences completely coinciding with the original sentence to be processed is extracted from the corresponding translation database by the retrieval in Step 102 or not is asked (Step 104), and if the answer is positive, the translated sentence of the natural sentence completely coinciding with the original sentence to be processed is read and displayed. However, the application is not limited to this. It is acceptable to omit the above-mentioned Steps 104 and 106 and to unconditionally perform the processing in Step 108 and the subsequent steps (processing such as calculating the degree of coincidence) without relating to whether any natural sentence completely coinciding with the original sentence to be processed is extracted by the retrieval in Step 102 or not.

In this mode, also when a plurality of natural sentences is extracted by the retrieval in Step 102, the degree of coincidence of the natural sentence is maximized if the natural sentence completely coinciding with the original sentence is contained in a plurality of the extracted natural sentences. Therefore, the same processing result as when Steps 104 and 106 are performed can be obtained.

Accuracy of selecting a translation in this invention depends on the numbers of natural sentences and the translated sentences registered in the corresponding translation database, and the accuracy of selecting a translation improves as the numbers of natural sentences and the translated sentences increase.

Therefore, it is acceptable to read original sentences to be translated and translated sentences in the translation-identifying system relating to this invention, and to automatically and additionally register the read natural sentences and translated sentences as they were or after performing selection in the corresponding translation database.

According to this invention, it is necessary only to additionally register the natural sentences and the translated sentences in the corresponding translation database, and it is not necessary to perform editing or processing, such as division of natural sentences by word unit. Therefore, it is very easy to automatically and additionally register information (the natural sentences and the translated sentences) in the corresponding translation database.

Although an example of the mode for highlighting the translation of the phrase to be translated when displaying a translated sentence was described above, the mode is not limited to this. It is a matter of course that the mode not highlighting the translation of the phrase to be translated is also included in the scope of the right of this invention.

The accuracy of selecting a translation in this invention also depends on redundancy of the contents of the natural sentences and the translated sentences registered in the corresponding translation database. When the redundancy of the contents of the natural sentences and the translated sentences registered in the corresponding translation database heightens, the accuracy of selecting a translation lowers in proportion to the numbers of the natural sentences and the translated sentences registered in the corresponding translation database (capacity of the corresponding translation database).

Therefore, when the individual natural sentences and translated sentences registered in the corresponding translation database is searched for natural sentences and the translated sentences having a high similarity of contents, and the natural sentences and translated sentences having a high similarity of contents are found, it is acceptable to provide the function for removing a set of the natural sentences and translated sentences from the corresponding translation database.

Although an example of selecting a translation using a single corresponding translation database was described above, the application is not limited to this. It is acceptable to divide the corresponding translation database by field of natural sentences when the original sentences to be processed are limited to a specific field such that the program is used for translating a manual of a specific field.

Thus, the increase of capacity for the individual corresponding translation database can be avoided and the effects, such as saving time for retrieving natural sentences and improvement of the accuracy of selecting a translation, are obtained.

Although an example of a mode in which the translation identifying processing is run by PC 10 according to the specified operation for commanding to display the translation of the phrase to be translated performed by a user through PC 10 was described above, the application is not limited to this. It is possible to configure by applying the invention to a computer system 38 where both a client PC 32 and a server 34 are connected to a network 30, such as the Internet or LAN (Local Area Network), and a storage medium 36 composed of a HDD, etc., for storing the corresponding translation database is connected to server 34 so that, when a user asks a translation on line through client PC 32, server 34 identifies and provides the suitable translation on-line as shown in Figure 4.

In computer system 38 shown in Figure 4, a text of an original sentence is specified in order to enable a user to make an inquiry on a translation (see (1) in Figure 4) by, for example, the operation that the user transmits text data of the source language to server 34 through client PC 32 or the user communicates the URL (uniform resource locator) of the Web page containing the text of the source language to server 34.

In this case, it is possible to configure the system so that server 34 executes the translation identifying processing while accessing the corresponding translation database stored in storage medium 36 to identify the translation (sentence) of the specified text (see (2) in Figure 4) and transmit the identified translation (sentence) to client PC 32 to answer to the inquiry (see (3) in Figure 4).

Since this configuration allows a plurality of users to share the translation identifying function (and the corresponding translation database) of server 34, it is effective for reducing cost especially when the capacity required for the corresponding translation database is large.

Although a mode for applying this invention to an electronic dictionary system was described above as an example, the application is not limited to this. It is a matter of course that this invention is also applicable to a machine translation (automatic translation) system, an automatic interpretation system (a system for performing interpretation by recognizing an acoustically entered original sentence by acoustic recognition, identifying the translated sentence of the recognized original sentence, and transmitting the identified translated sentence acoustically), a language learning system, etc.

Figure 5 is a schematic diagram showing a configuration of a machine translation system 40 to which this invention is applied.

In Figure 5, an original sentence input section 42 inputs (text data of) an original sentence to be translated to both a section for selecting a phrase to be translated 44 and a translated sentence assembly section 46.

Section for selecting a phrase to be translated 44 repetitively selects a specific phrase in the entered original sentence to be translated as a phrase to be translated and asks a translation identifying section 48 to retrieve a translation of the selected phrase to be translated while selecting an individual phrase in the original sentence to be translated as the phrase to be translated in sequence.
Translation identifying section 48 is a section corresponding to the translation-identifying system relating to this invention and executes translation-identifying processing while accessing a corresponding translation database stored in a storage medium 50 to identify the translation of the inquired phrase to be translated and to transmit the identified translation to translated sentence assembly section 46.

Translated sentence assembly section 46 links translations (changes arranging order if necessary) transmitted from translation identifying section 48 to assemble the translated sentence in a target language based on the phrases to be translated transmitted from section for selecting a phrase to be translated 44, their translations transmitted from translation identifying section 48 and the original sentence of the phrase to be translated transmitted from original sentence input section 42.
The translated sentence assembled in translated sentence assembly section 46 is transmitted to translated sentence output section 52 to perform translated sentence output processing, such as displaying on a display, recording to a storage medium, acoustic output, etc.
In the above-mentioned configuration, since this invention is applied to identification of the translation of the phrase to be translated, the translation having high probability of obtaining a natural translated sentence as a sentence in the target language is obtained from the original sentence, and the translated sentence transmitted from translated sentence output section 52 becomes a natural translated sentence as a sentence in the target language.
Moreover, since no complicated processing such as identifying a part of speech or analyzing a sentence structure is required, the process can be simplified.
It is a matter of course that, also in Figure 5, it is acceptable to transmit on-line the translated sentence obtained through the processing such as identifying and assembling the translations to answer the inquiry of translated sentence made on-line as shown in Figure 4 already explained.

Although one of a pair of correlated sentences (a pair of sentences described in different languages) registered in the corresponding translation database (storage means) and the other of the pair were called a natural sentence and a translated sentence respectively, it is possible to use corresponding translation database created for translation (identification of translated sentence) from a first language to a second language as the database for translation (identification of translated sentence) from the second language to the first language as described above.

Although the cases of English, Japanese, and Chinese are described above as an example of a source language or a target language, the languages are not limited to these. It is a matter of course that, for example, French, German, Italian, Spanish, Portuguese, etc. are applicable as the original or target language.

Description of the Reference Numerals

| | |
|---|---|
| 10 | PC |
| 18 | HDD |
| 34 | Server |
| 36 | Storage medium |
| 40 | Machine translation system |
| 48 | Translation identifying section |
| 50 | Storage medium |

## Claims

1. A system for identifying a corresponding translation, comprising a storage means for storing a plurality of natural sentences in a source language composed of a plurality of words correlated with translated sentences in a target language, a retrieval means for retrieving natural sentences containing phrases to be translated in original sentences in said source language from a plurality of natural sentences in said source language stored in said storage means, and a first translation identifying means for evaluating a degree of coincidence between natural sentences extracted by retrieval of said retrieval means and identifying translations of at least said phrase to be translated in translated sentences of natural sentences selected on the basis of said evaluated degree of coincidence, as translations of said phrase to be translated.

2. The system for identifying a corresponding translation according to Claim 1, wherein said retrieval means retrieves natural sentences completely coinciding with said original sentences from a plurality of natural sentences in said source language stored in said storage means, and, when natural sentences completely coinciding with said original sentences are extracted by retrieval of said retrieval means, said first translation identifying means identifies said translated sentences of natural sentences completely coinciding said original sentences as translated sentences of said original sentences.

3. The system for identifying a corresponding translation according to Claim 1, wherein said translation identifying means counts the number of words coinciding between natural sentences extracted by retrieval of said retrieval means and said original sentences and evaluates a degree of coincidence with said original sentences so that said degree of coincidence with said original sentences heightens as said counted number of coinciding words increases.

4. The system for identifying a corresponding translation according to Claim 3, wherein said first translation identifying means calculates said degree of coincidence by dividing said counted number of coinciding words by the number of words composing said phrase to be translated.

5. The system for identifying a corresponding translation according to Claim 3, wherein said first translation identifying means also counts the number of mismatching words between natural sentences extracted by retrieval of said retrieval means and said original sentences and evaluates said degree of coincidence with said original sentences so that said degree of coincidence with said original sentences heightens as said counted number of mismatching words decreases.

6. The system for identifying a corresponding translation according to Claim 3, wherein said first translation identifying means excludes predefined frequently appearing words from words to be counted when counting said number of coinciding words.

7. The system for identifying a corresponding translation according to Claim 3 or 5, wherein said first translation identifying means counts words having different endings due to a difference of singular/plural or tense by regarding said words as coinciding words when counting said number of coinciding words or said number of mismatching words.

8. The system for identifying a corresponding translation according to Claim 3, wherein said first translation identifying means does not repetitively count coinciding words appearing twice or more when counting said number of coinciding words.

9. The system for identifying a corresponding translation according to Claim 3 or 5, wherein said first translation identifying means evaluates similarity of arranged order of words between natural sentences extracted by retrieval of said retrieval means and said original sentences and evaluates said degree of coincidence with said original sentences so that said degree of coincidence with said original sentences heightens as said similarity of arranged order of words heightens.

10. The system for identifying corresponding translation according to Claim 3 or 5, wherein said first translation identifying means counts said number of mismatching words existing between words coinciding with said original sentences in natural sentences extracted by retrieval of said retrieval means and evaluates said degree of coincidence with said original sentences so that said degree of coincidence with said original sentences heightens as said number of mismatching words existing between said counted coinciding words decreases.

11. The system for identifying a corresponding translation according to Claim 1, additionally comprising a search means for searching natural sentences extracted by retrieval of said retrieval means for said phrase to be translated and frequently appearing words that frequently appear in the same sentence of said source language, wherein said first translation identifying means refers to specific frequently appearing phrases found by said search means and existing in said original sentence and translated sentences of natural sentences containing each of said phrase to be translated among natural sentences extracted by retrieval of said retrieval means to search natural sentences containing each of said phrase to be translated and said specific frequently appearing phrases for frequently appearing translations of phrase to be translated and to identify found frequently appearing translations as translations of said phrase to be translated in said original sentence.

12. The system for identifying a corresponding translation according to Claim 1, additionally comprising an identifying means for identifying alternative phrases existing in said original sentences and replaceable with targeted phrases not contained in natural sentences extracted by retrieval of said retrieval means, wherein said first translation identifying means identifies translations of at least said phrase to be translated in translated sentences of natural sentences containing each of alternative phrases identified by said identifying means and said phrase to be translated among natural sentences extracted by retrieval of said retrieval means, as translations of at least said phrase to be translated in said original sentences.

**13.** The system for identifying a corresponding translation according to Claim 12, wherein said identifying means searches a plurality of natural sentences stored in said storage means for natural sentences containing said targeted words, searches natural sentences stored in said storage means for natural sentences having the same sentence structure as natural sentences extracted by said searching, and identifies phrases replaced with targeted phrases in natural sentences extracted by said retrieval as said alternative phrases.

**14.** A system for identifying a corresponding translation, comprising a storage means for storing a plurality of natural sentences, of original sentences composed of a plurality of words, correlated with translated sentences in a target language, a retrieval means for retrieving natural sentences containing phrase to be translated in original sentences in a source language from a plurality of natural sentences in said source language stored in said storage means, a search means for searching natural sentences extracted by retrieval of said retrieval means for said phrase to be translated and frequently appearing translations appearing in the same sentence of said source language, a second translation identifying means for searching translated sentences of natural sentences containing each of said phrase to be translated and specific frequently appearing phrases for frequently appearing translations of phrase to be translated by referring to said specific frequently appearing phrases found by said search means and existing in said original sentences and referring to translated sentences of natural sentences containing each of said phrase to be translated among natural sentences extracted by retrieval of said retrieval means and for identifying found frequently appearing translations as translations of said phrases to be translated in said original sentences.

**15.** The system for identifying a corresponding translation according to Claim 1 or 14, wherein, when said phrase to be translated is composed of a plurality of words, said retrieval means retrieves natural sentences containing at least one of a plurality of words composing said phrase to be translated from a plurality of natural sentences in said source language stored in said storage means.

**16.** A method for identifying a corresponding translation, comprising a first step in which natural sentences, in a source language each of which is composed of a plurality of words, stored in a storage means correlated with translated sentences in a target language are retrieved, and a second step in which a degree of coincidence between natural sentences extracted by retrieval in said first step and said original sentences is evaluated and translations of at least said phrase to be translated in translated sentences of natural sentences selected on the basis of the evaluated degree of coincidence are identified as translations of at least said phrase to be translated in said original sentences.

**17.** A method for identifying corresponding translation, comprising a first step in which natural sentences, in a source language each of which is composed of a plurality of words, stored in a storage means correlated with translated sentences in a target language are retrieved, a second step in which natural sentences extracted by retrieval in said first step are searched for said phrase to be translated and frequently appearing words that appear frequently in the same sentence of a source language, and a third step in which translated sentences of natural sentences containing each of said phrase to be translated and said specific frequently appearing phrases are searched for frequently appearing translations of phrase to be translated and found frequently appearing translations are identified as translations of said phrase to be translated in said original sentences referring to specific frequently appearing phrases found in said second step and existing in said original sentences and referring to translations of natural sentences containing each of said phrase to be translated among natural sentences extracted by retrieval in said first step.

**18.** A program for allowing a computer connected to a storage means storing a plurality of natural sentences in a source language composed of a plurality of words by correlating with translations in a target language to function as a retrieval means for retrieving natural sentences containing phrase to be translated in original sentences in said source language from a plurality of natural sentences in said source language stored in said storage means, and a first translation identifying means for evaluating a degree of coincidence between natural sentences extracted by retrieval of said retrieval means and said original sentences and for identifying translations of at least said phrase to be translated in translated sentences of natural sentences selected on the basis of the evaluated degree of coincidence as translations of at least said phrase to be translated in said original sentences.

**19.** A program for allowing a computer connected to a storage means storing a plurality of natural sentences in a source language composed of a plurality of words by correlating with translations in a target language to function as a retrieval means for retrieving natural sentences containing phrase to be translated in original sentences in said source language from a plurality of natural sentences in said source language stored in said storage means, a search means for searching natural sentences extracted by retrieval of said retrieval means for said phrase to be translated and frequently appearing phrases that frequently appears in the same sentence of a source language, and a second translation identifying means for searching translated sentences of natural sentences containing each of said phrase to be translated and said specific frequently appearing phrases for frequently appearing translations of phrase to be translated and for identifying found frequently appearing translations as translations of said phrase to be translated in said original sentences by referring to specific frequently appearing phrases found by said search means and existing in said original sentences and referring to translations of natural sentences each of which contains said phrase to be translated.

FIG.1

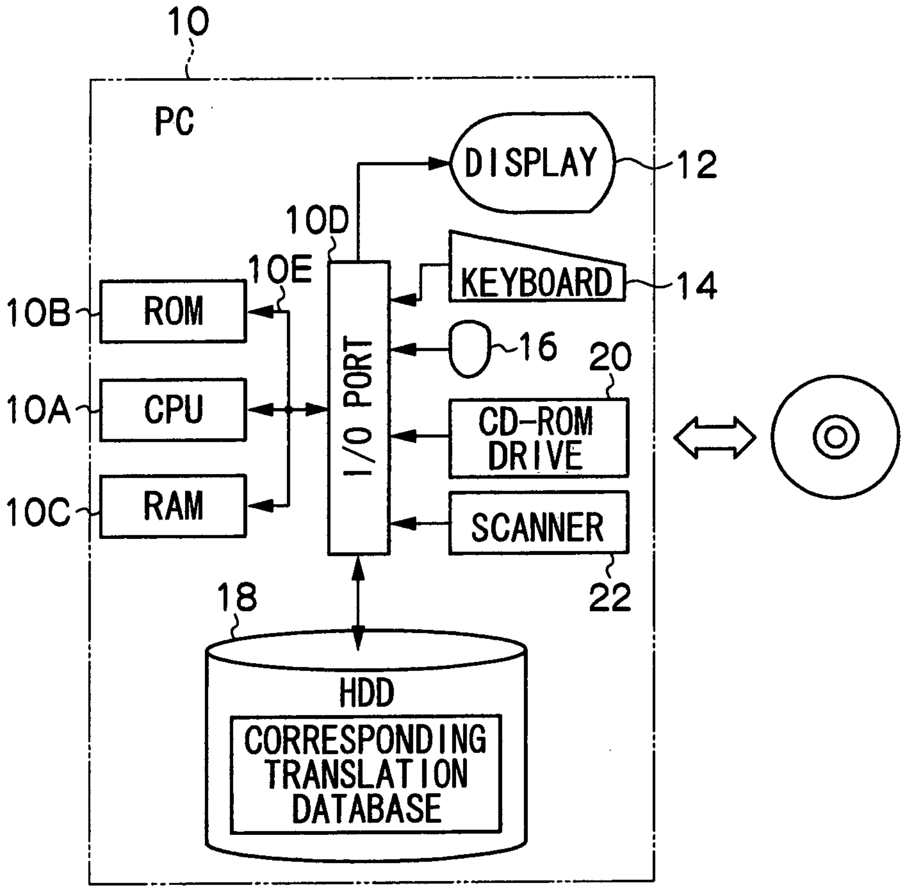
10
PC
DISPLAY
12
10D
10E
KEYBOARD
14
10B
ROM
16
20
10A
CPU
I/O PORT
CD-ROM DRIVE
10C
RAM
SCANNER
22
18
HDD
CORRESPONDING TRANSLATION DATABASE

FIG.2

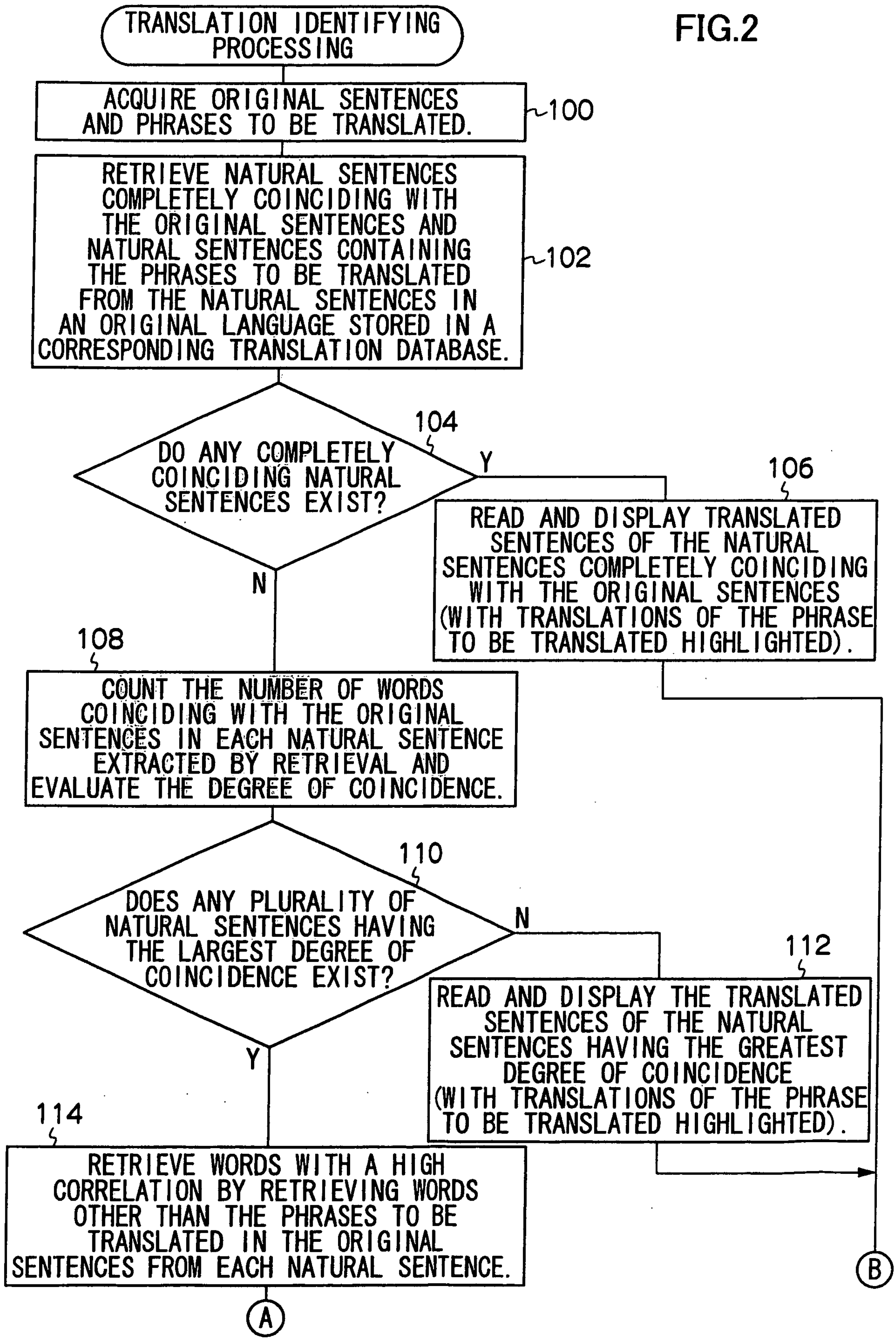

TRANSLATION IDENTIFYING PROCESSING
ACQUIRE ORIGINAL SENTENCES AND PHRASES TO BE TRANSLATED.
100
RETRIEVE NATURAL SENTENCES COMPLETELY COINCIDING WITH THE ORIGINAL SENTENCES AND NATURAL SENTENCES CONTAINING THE PHRASES TO BE TRANSLATED FROM THE NATURAL SENTENCES IN AN ORIGINAL LANGUAGE STORED IN A CORRESPONDING TRANSLATION DATABASE.
102
DO ANY COMPLETELY COINCIDING NATURAL SENTENCES EXIST?
104
Y
N
106
READ AND DISPLAY TRANSLATED SENTENCES OF THE NATURAL SENTENCES COMPLETELY COINCIDING WITH THE ORIGINAL SENTENCES (WITH TRANSLATIONS OF THE PHRASE TO BE TRANSLATED HIGHLIGHTED).
108
COUNT THE NUMBER OF WORDS COINCIDING WITH THE ORIGINAL SENTENCES IN EACH NATURAL SENTENCE EXTRACTED BY RETRIEVAL AND EVALUATE THE DEGREE OF COINCIDENCE.
110
DOES ANY PLURALITY OF NATURAL SENTENCES HAVING THE LARGEST DEGREE OF COINCIDENCE EXIST?
N
Y
112
READ AND DISPLAY THE TRANSLATED SENTENCES OF THE NATURAL SENTENCES HAVING THE GREATEST DEGREE OF COINCIDENCE (WITH TRANSLATIONS OF THE PHRASE TO BE TRANSLATED HIGHLIGHTED).
114
RETRIEVE WORDS WITH A HIGH CORRELATION BY RETRIEVING WORDS OTHER THAN THE PHRASES TO BE TRANSLATED IN THE ORIGINAL SENTENCES FROM EACH NATURAL SENTENCE.
A
B

FIG.2 (CONTINUED)

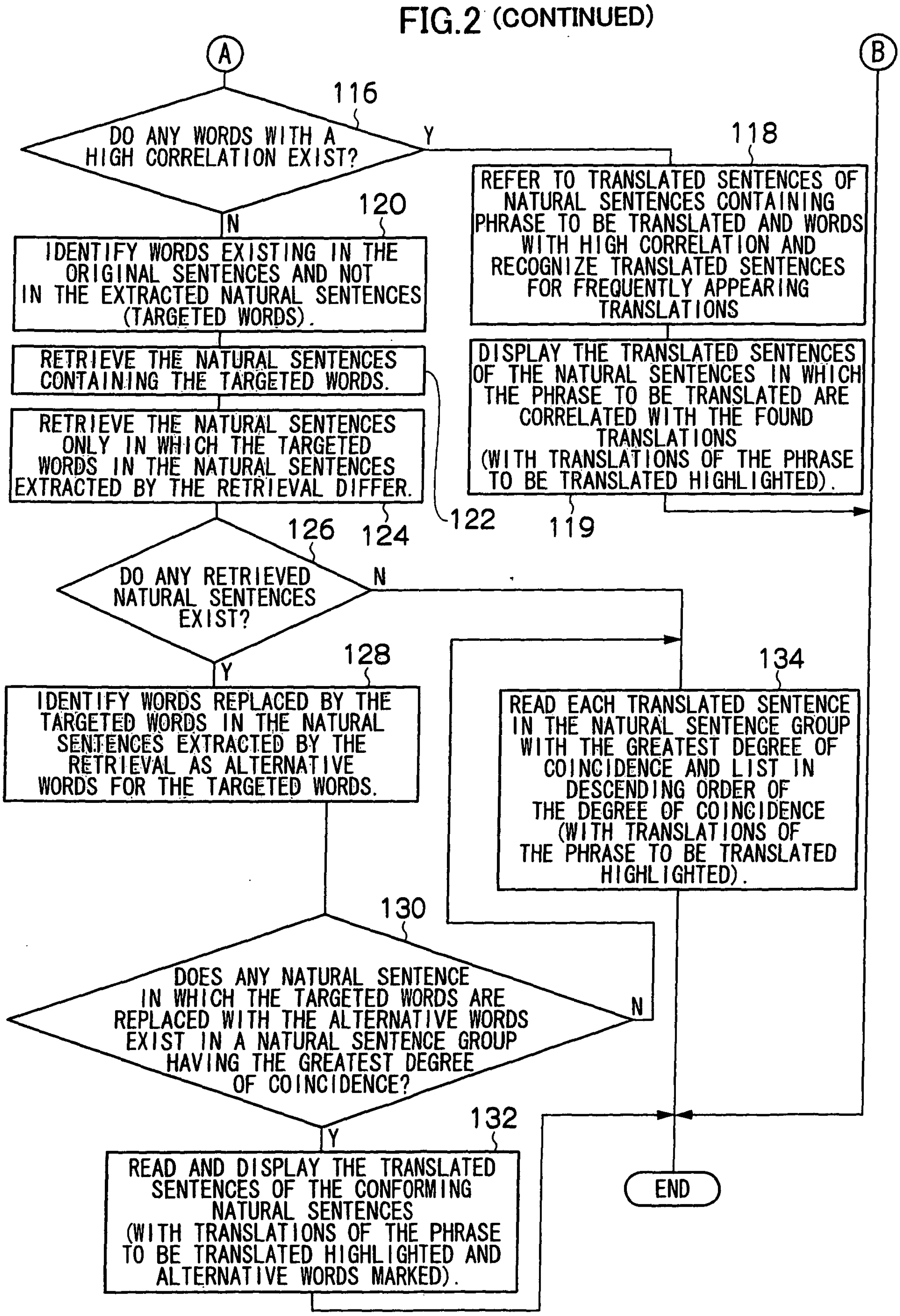

FIG.3

| | NATURAL SENTENCES | TRANSLATED SENTENCES |
|---|---|---|
| 1 | OPERATIONS MANAGEMENT | 業務管理(Gyomu kanri) |
| 2 | THE OPERATIONS OF THE NEW LAW | 新法の適用(shimpo no tekiyo) |
| 3 | THE SYSTEM CAME INTO OPERATION | システムが稼動し始めた。<br>(Sisutemu ga kadoshi-hajimeta.) |
| 4 | OPERATIONS RESEARCH | オペレーションズリサーチ(Opereshonzu risachi) |
| 5 | PUT INTO OPERATION | 実施する(jisshi-suru) |
| 6 | AFTER JOHN'S OPERATION, HIS CANCER WAS CURED | ジョンさんの手術後、彼の癌は治った。<br>(Jon-san no shujutsu-go, kare no gan wa naotta.) |
| 7 | OPERATIONS ROOM | 作戦室(sakusen-shitsu) |
| 8 | THEY MONITOR THE COMPUTER OPERATIONS IN THE CANCER WARD. | 癌病棟のコンピュータ操作を監視する。<br>(Gan-byoto no kompyuta-sosa wo kanshisuru.) |

FIG.4

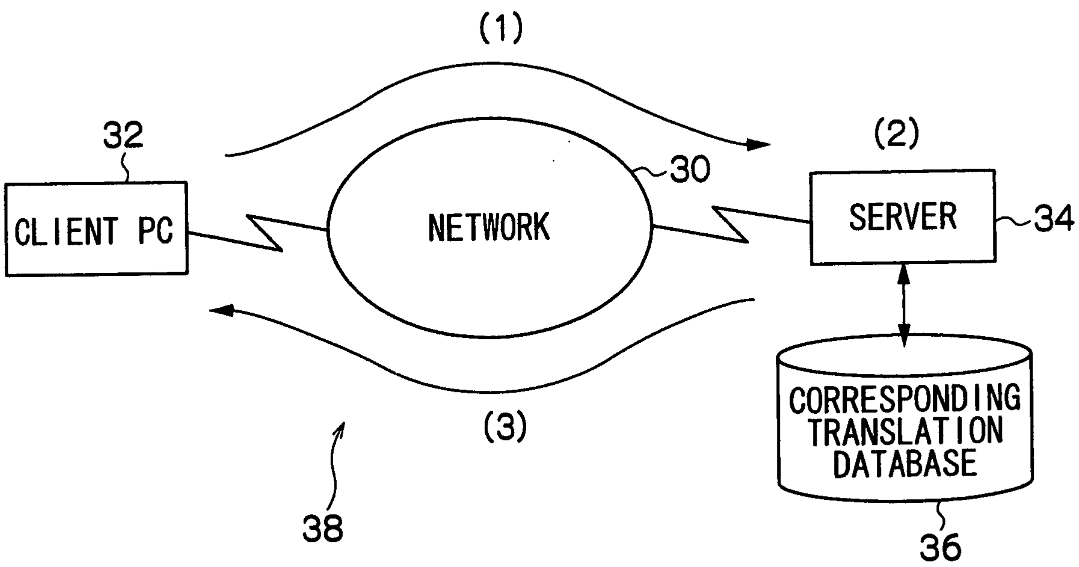
(1)
32
30
(2)
CLIENT PC
NETWORK
SERVER
34
CORRESPONDING TRANSLATION DATABASE
(3)
38
36

FIG.5

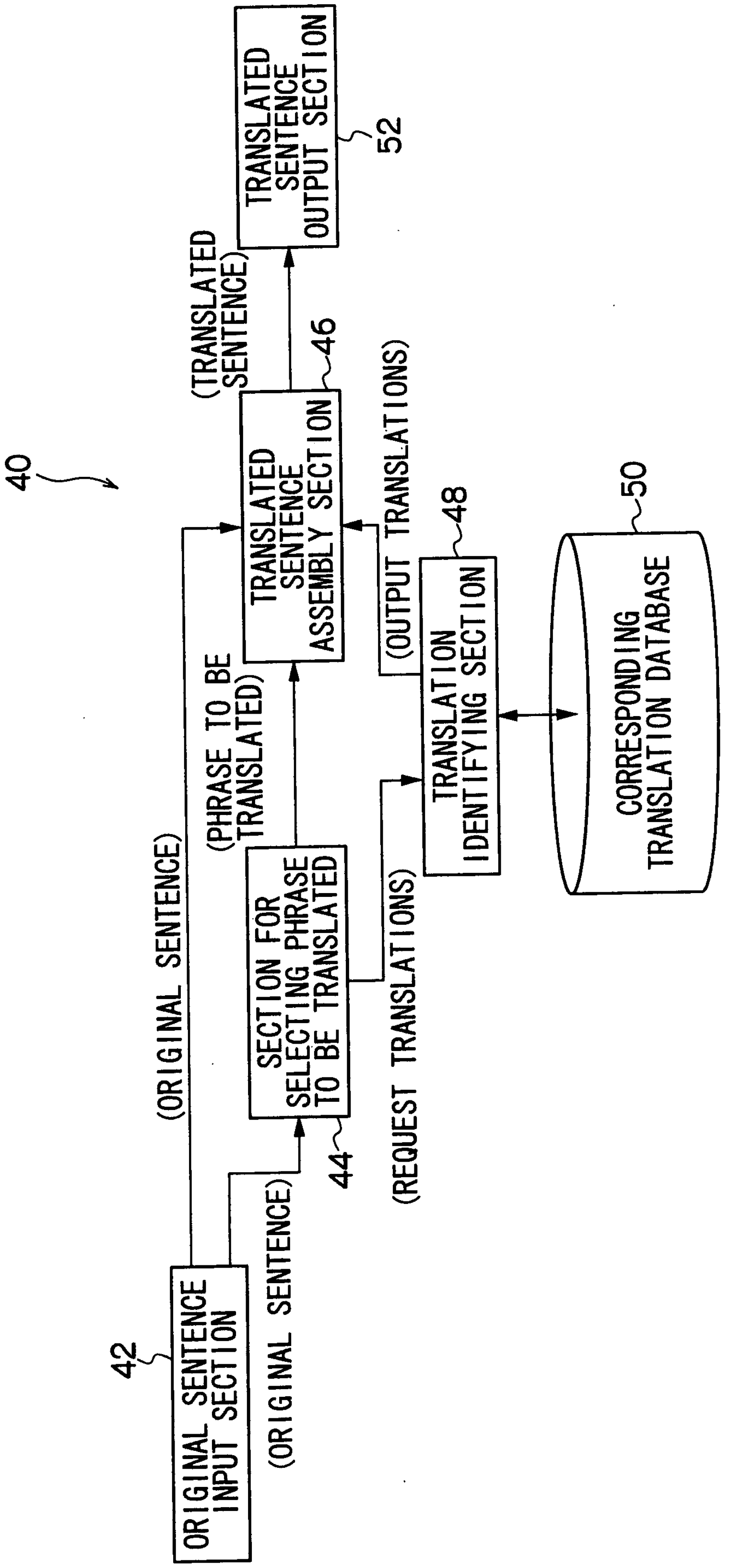
40
42
ORIGINAL SENTENCE INPUT SECTION
(ORIGINAL SENTENCE)
(ORIGINAL SENTENCE)
44
SECTION FOR SELECTING PHRASE TO BE TRANSLATED
(REQUEST TRANSLATIONS)
(PHRASE TO BE TRANSLATED)
46
TRANSLATED SENTENCE ASSEMBLY SECTION
(OUTPUT TRANSLATIONS)
48
TRANSLATION IDENTIFYING SECTION
50
CORRESPONDING TRANSLATION DATABASE
(TRANSLATED SENTENCE)
52
TRANSLATED SENTENCE OUTPUT SECTION

**INTERNATIONAL SEARCH REPORT**

International application No.
PCT/JP2004/015263

A. CLASSIFICATION OF SUBJECT MATTER
Int.Cl[7] G06F17/28

According to International Patent Classification (IPC) or to both national classification and IPC

B. FIELDS SEARCHED

Minimum documentation searched (classification system followed by classification symbols)
Int.Cl[7] G06F17/28

Documentation searched other than minimum documentation to the extent that such documents are included in the fields searched

| | | | |
|---|---|---|---|
| Jitsuyo Shinan Koho | 1922-1996 | Toroku Jitsuyo Shinan Koho | 1994-2005 |
| Kokai Jitsuyo Shinan Koho | 1971-2005 | Jitsuyo Shinan Toroku Koho | 1996-2005 |

Electronic data base consulted during the international search (name of data base and, where practicable, search terms used)
JICST FILE(JOIS), WPI, INSPEC(DIALOG)

C. DOCUMENTS CONSIDERED TO BE RELEVANT

| Category* | Citation of document, with indication, where appropriate, of the relevant passages | Relevant to claim No. |
|---|---|---|
| X<br><br>Y<br>A | JP 2003-263434 A (Kabushiki Kaisha Kokusai Denki Tsushin Kiso Gijutsu Kenkyusho), 19 September, 2003 (19.09.03), Par. Nos. [0021] to [0022] (Family: none) | 1-2,12-13, 15,16,18<br>3-10<br>11,14,17,19 |
| Y | JP 04-160473 A (Hitachi, Ltd.), 03 June, 1992 (03.06.92), Page 4, lower left column, line 4 to page 4, lower right column, line 6 (Family: none) | 3-10 |
| Y | JP 2000-020524 A (Fuji Xerox Co., Ltd.), 21 January, 2000 (21.01.00), Par. No. [0008] (Family: none) | 6 |

☐ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| | |
|---|---|
| Date of the actual completion of the international search<br>17 January, 2005 (17.01.05) | Date of mailing of the international search report<br>01 February, 2005 (01.02.05) |
| Name and mailing address of the ISA/<br>Japanese Patent Office<br><br>Facsimile No. | Authorized officer<br><br>Telephone No. |

Form PCT/ISA/210 (second sheet) (January 2004)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 11328178 A
- WO 6314294 A